# EUROPÄISCHE PATENTSCHRIFT

(11) **EP 3 512 788 B1**
(45) Veröffentlichungstag und Bekanntmachung des Hinweises auf die Patenterteilung: **10.03.2021**
(21) Anmeldenummer: 17758862.1
(22) Anmeldetag: 28.08.2017
(51) Int. Cl.: B65G 47/82, G07D 3/14

(54) **VERFAHREN UND VORRICHTUNG ZUM SORTIEREN VON SCHEIBENFOERMIGEN OBJEKTEN**
METHOD AND APPARATUS FOR SORTING DISC-SHAPED OBJECTS
PROCÉDÉ ET DISPOSITIF DE TRI D'OBJETS EN FORME DE DISQUE

(30) Priorität: 13.09.2016 DE 102016217432
(43) Veröffentlichungstag der Anmeldung: 24.07.2019
(73) Patentinhaber: Mühlbauer GmbH & Co. KG, 93426 Roding (DE)
(72) Erfinder: HESSE, Günter, 09430 Drebach (DE); REITINGER, Andreas, 93449 Waldmünchen (DE)
(74) Vertreter: Platzöder, Michael Christian
(86) Internationale Anmeldenummer: PCT/EP2017/071563
(87) Internationale Veröffentlichungsnummer: WO 2018/050427

(56) Entgegenhaltungen:
- EP-A2- 2 241 520
- WO-A2-2012/083033
- DE-A1- 10 213 920

## Beschreibung

Es werden eine Vorrichtung sowie ein Verfahren zum Sortieren von scheibenförmigen Objekten, ausgewählt aus der Gruppe bestehend aus Münzen, Wertchips, Jetons und Medaillen, beschrieben.

Bei der Produktion von Münzen oder anderen scheibenförmigen Objekten wie Wertchips, Token, Jetons, Medaillen oder anderen ähnlichen Objekten, die insbesondere zumindest im Wesentlichen kreisscheibenförmig sein können, ist es regelmäßig erforderlich, zur Qualitätssicherung die erzeugten Objekte auf Produktionsmängel hin zu inspizieren und eine entsprechende Sortierung in fehlerfreie Objekte, sog. "Gutteile", und mangelbehaftete Objekte, sog. "Mangelteile", vorzunehmen. So kann sichergestellt werden, dass nur Gutteile in den Handel, bzw. speziell im Falle von Münzen in den Geldkreislauf, gelangen. Des Weiteren kann es sinnvoll sein, solche Objekte auch später, wenn sie sich bereits in Benutzung befinden, insbesondere regelmäßig, einer Inspektion bezüglich inzwischen aufgetretener Beschädigungen oder bezüglich ihrer Echtheit zu unterziehen. Dies ist vor allem im Falle von Münzen angebracht, da beschädigte oder unechte, insbesondere gefälschte, Münzen regelmäßig aus dem Geldkreislauf entfernt und durch neue echte Münzen ersetzt werden müssen. In einem anderen Anwendungsfall können Gutteile als Objekte eines bestimmten Objekttyps, insbesondere als Münzen einer bestimmten Sorte oder eines bestimmten Nennwerts innerhalb einer Sorte identifiziert werden, während Objekte eines anderen Objekttyps, insbesondere einer anderen Sorte oder anderer Nennwerte als "Mangelteile" identifiziert werden. Auf diese Weise ist ein Sortieren nach Objekttypen möglich.

Zum Sortieren von Münzen sind aus dem Stand der Technik verschiedenste Sortiermaschinen bekannt. So ist in der Offenlegungsschrift DE 10 2012 100 309 A1 eine Vorrichtung zur Handhabung von Münzen beschrieben, die eine Sortiereinheit zum wahlweisen Zuführen der Münzen zu mindestens zwei Aufnahmebehältern umfasst. Die Sortiereinheit weist ein Transportelement auf, mit dessen Hilfe die Münzen in eine Transportrichtung transportiert werden. Ferner hat die Sortiereinheit ein erstes Abwurfelement und mindestens ein zweites Abwurfelement, wobei die Münzen mit Hilfe des ersten Abwurfelementes von dem Transportelement abgeworfen und dem ersten Aufnahmebehälter zugeführt werden können. Entsprechend können die Münzen mit Hilfe des zweiten Abwurfelementes von dem Transportelement abgeworfen und dem zweiten Aufnahmebehälter zugeführt werden. Die Abwurfelemente sind in Transportrichtung gesehen nebeneinander angeordnet und können insbesondere mittels Hubmagneten ausgebildet sein, die die Münzen senkrecht zu deren Bewegungsrichtung von dem Transportelement stoßen, um sie selektiv in die jeweiligen Aufnahmebehälter auszuwerfen.

Weiterer Stand der Technik wird in der DE 10213920 A1, der WO 2012/083033 A2, der EP 0314881 A2, der US 3465870 A und der EP 2241520 A2 offenbart.

Der vorliegenden Erfindung liegt die Aufgabe zugrunde, eine Vorrichtung und ein Verfahren zum Sortieren von scheibenförmigen Objekten, insbesondere von Münzen, anzugeben, die eine Erhöhung des Objektdurchsatzes und der Dauer eines ununterbrochenen Sortierbetriebs der Vorrichtung ermöglichen und dabei die Wahrscheinlichkeit von Fehlsortierungen geringhalten.

Eine Lösung dieser Aufgabe wird gemäß der Lehre der unabhängigen Ansprüche erreicht durch eine Vorrichtung gemäß Anspruch 1 zur Sortieren von scheibenförmigen Objekten und ein entsprechendes Verfahren gemäß Anspruch 18. Verschiedene Ausführungsformen und Weiterbildungen der Erfindung sind Gegenstand der Unteransprüche.

Ein erster Aspekt der Erfindung betrifft demgemäß eine Vorrichtung zum Sortieren von scheibenförmigen Objekten, ausgewählt aus der Gruppe bestehend aus Münzen, Wertchips, Token, Jetons und Medaillen. Die Vorrichtung weist eine Fördervorrichtung auf, die konfiguriert ist, vereinzelte scheibenförmigen Objekte entlang einer Förderstrecke zu fördern. Des Weiteren weist die Vorrichtung eine Ausschleusungseinheit auf, mit einem schwenkbaren Ausleitelement zum selektiven Ausschleusen von einzelnen der entlang der Förderstrecke geförderten Objekten in Abhängigkeit von einer für die Objekte jeweils zuvor bestimmten Einordnung in eine Klassifizierung, die zwischen Gutteilen und Mangelteilen unterscheidet. Dabei ist das Ausleitelement eingerichtet, zum Ausschleusen eines Objekts mittels eines Antriebs so in die Förderstrecke eingeschwenkt zu werden, dass es mittels der Schwenkbewegung einen mechanischen Impuls auf das auszuschleusende Objekt überträgt, der bezüglich der Bewegungsrichtung des Objekts zum Zeitpunkt des Impulsübertrags sowohl eine senkrecht gerichtete als auch eine anti-parallel gerichtete Impulskomponente aufweist, die so gewählt sind, dass durch den Impuls die Bewegungsrichtung des Objekts geändert und dieses dadurch aus der Förderstrecke ausgeschleust wird. Die Ausschleusungseinheit ist dabei konfiguriert, eine Sortierung von Gutteilen und Mangelteilen derart zu bewirken, dass nur solche der geförderten Objekte mittels des Ausleitelements ausgeschleust werden, welche gemäß der Klassifizierung als Gutteile eingeordnet wurden. Die Fördervorrichtung weist eine Ausrichtungsvorrichtung zum Ausrichten der zum Ausleitelement hin geförderten Objekte entlang einer entlang der Förderstrecke verlaufenden Ausrichtungslinie auf. Die Ausrichtungsvorrichtung ist dabei bevorzugt mittels eines Führungsprofilstücks, etwa eines Führungsblechs, ausgebildet. Das Ausleitelement ist gegenüber dieser Ausrichtungslinie so versetzt angeordnet, dass bei seiner Schwenkbewegung zunächst eine von Null verschiedene Auslenkung aus seiner Ausgangsstellung erfolgen muss, bevor das Ausleitelement mit einem derart ausgerichteten auszuschleusenden Objekt zur Übertragung des mechanischen Impulses in Berührungskontakt kommen kann.

Unter einer "Fördervorrichtung" im Sinne der Erfindung ist eine Vorrichtung zu verstehen, die eingerichtet ist, scheibenförmige Objekte entlang einer Förderstrecke zu transportieren. Eine Fördervorrichtung kann bevorzugt mittels eines Förderbandes oder wenigstens eines Transportriemens ausgebildet sein, ohne jedoch darauf beschränkt zu sein.

Unter einem "Ausleitelement" im Sinne der Erfindung ist ein Bauteil zu verstehen, das aus einer Ausgangsstellung, in der es nicht in die Förderstrecke eintaucht, in diese mittels einer Schwenkbewegung einschwenkbar ist, um einen mechanischen Impuls auf entlang der Förderstrecke geförderte Objekte zu übertragen. Ein Ausleitelement kann somit insbesondere in Form eines Schlegels ausgebildet sein. Auch andere Formen des Bauteils, die bezüglich einer realen oder virtuellen Schwenkachse der Schwenkbewegung keine Kreissymmetrie aufweisen sind grundsätzlich möglich.

Die erfindungsgemäße Vorrichtung ermöglicht es, eine Sortierung der zur Ausschleusungseinheit geförderten Objekte in Gutteile und Mangelteile auf einfache Art vorzunehmen. Dadurch, dass anders als bei herkömmlichen Verfahren, bei denen in der Regel Mangelteile aus der Förderstrecke ausgeschleust werden, während die Gutteile auf der Förderstrecke verbleiben, hier umgekehrt nur die Gutteile aus der Förderstrecke ausgeschleust werden, bleibt selbst bei einem Defekt oder Ausfall der Ausschleusungseinheit die Homogenität der ausgeschleusten Teile untereinander erhalten, sodass diesbezüglich keine Fehlsortierungen auftreten können.

Die Schwenkbewegung des Ausleitelements kann, insbesondere mittels eines motorischen Antriebs, sehr schnell ausgeführt werden, so dass beim Sortieren sehr hohe Durchsätze, z.B. jenseits von 20 Objekten pro Sekunde, möglich werden. Die Richtung des Impulsübertrags ist dabei so gewählt, dass der aufgrund der Bewegung des Objekts entlang der Förderstrecke vorhandene mechanische Impuls des Objekts an dem Ausleitelement "reflektiert" und mit dem zusätzlich durch die Schwenkbewegung das Ausleitelement übertragenen Impuls so zu einem resultierenden Gesamtimpuls addiert wird, dass dieser zu einer Ablenkung des Objekts aus der Förderstrecke heraus und somit zu einer Ausschleusung des Objekts führt. Somit kann die bereits aufgrund der Förderung vorhandene kinetische Energie des Objekts zur Ausschleusung genutzt werden, was eine höhere Energieeffizienz der Vorrichtung gegenüber solchen Lösungen ermöglicht, bei denen die zur Ausschleusung erforderliche Bewegungsenergie ausschließlich von einem Ausleitelement bereitzustellen ist. Die ausgeschleusten Objekte können insbesondere mit einem in Richtung des Gesamtimpulses angeordneten Auffangbehälter erfasst und gesammelt werden.

Mithilfe der Ausrichteeinrichtung werden unbeabsichtigte, durch Berührung mit dem Ausleitelement bewirkte, Ablenkungen von gemäß ihrer Einordnung in die Klassifikation nicht zur Ausschleusung vorgesehenen Objekten auf einfache Weise vermieden. Aufgrund der Versetzung des Ausleitelements gegenüber der Ausrichtungslinie sind dabei sogar Toleranzen bis hin zu der von Null verschiedenen Auslenkung hin bezüglich der Position des Ausleitelements um seine korrekte Ausgangsstellung herum möglich, ohne dass es zu einer solchen unbeabsichtigten Ablenkung kommt.

Nachfolgend werden bevorzugte Ausführungsformen der Vorrichtung und deren Weiterbildungen beschrieben, die jeweils, soweit dies nicht ausdrücklich ausgeschlossen wird, beliebig miteinander sowie mit dem im Weiteren beschriebenen auf ein entsprechendes Verfahren gerichteten zweiten Aspekt der Erfindung kombiniert werden können.

Gemäß einer ersten bevorzugten Ausführungsform weist die Vorrichtung des Weiteren eine Inspektionseinheit auf, die entlang der Förderstrecke vor dem Ausleitungselement angeordnet und eingerichtet ist, die entlang der Förderstrecke geförderten Objekte jeweils sensorisch zu inspizieren und abhängig vom Ergebnis der Inspektion die geförderten Objekte jeweils in die Klassifizierung einzuordnen und diese Einordnungen an die Ausschleusungseinheit zu kommunizieren. Auf diese Weise wird die Vorrichtung ertüchtigt, selbst die Einordnung der Objekte in die Klassifizierung vorzunehmen, und somit autark und unabhängig von externen Signal- oder Datenquellen zur Bereitstellung dieser Einordnungsinformationen zu arbeiten.

Gemäß einer weiteren bevorzugten Ausführungsform ist zum Antrieb des Ausleitelements ein Elektromotor vorgesehen, mit dessen angetriebener Welle das Ausleitelement gekoppelt ist. Bevorzugt ist der Elektromotor ein Servomotor und die Ausschleusungseinheit weist des Weiteren eine Steuereinheit auf, die eingerichtet ist, den Servomotor mittels entsprechender Steuersignale anzusteuern, um das von dem Servomotor angetriebene Ausleitelement zu veranlassen, in Abhängigkeit von der für die geförderten Objekte jeweils zuvor bestimmten Einordnung in die Klassifizierung selektiv als Gutteile eingeordnete Objekte mittels der Schwenkbewegung auszuschleusen. Elektromotoren, und dabei insbesondere Servomotoren, bieten den Vorteil, dass damit eine feinregulierte Einstellung der Schwenkbewegung ermöglicht wird, sodass die Schwenkbewegung des durch den Elektromotor angetriebenen Ausleitelements optimal an die zu sortierenden Objekte, insbesondere an deren Ausmaße, Gewicht, Materialeigenschaften und Fördergeschwindigkeit angepasst werden kann.

Dementsprechend ist gemäß einer bevorzugten Weiterbildung dazu die Steuereinheit zur Anpassung der Schwenkbewegung des Ausleitelements an den Typ der zu sortierenden Objekte so konfigurierbar, das zumindest einer, bevorzugt sämtliche, der folgenden Parameter der Schwenkbewegung einstellbar ist bzw. sind: (i) Ein Maß für die Beschleunigung des Ausleitelements bzw. für die diese bewirkende Kraft; (ii) ein Maß für die nach erfolgter Beschleunigung und vor dem Berührungskontakt des Ausleitelements mit dem auszuschleusenden Objekt erreichte Endgeschwindigkeit, insbesondere Winkelgeschwindigkeit, des Ausleitelements; (iii) ein Maß zur Bestimmung des Zeitpunkts für den Start der Schwenkbewegung in Abhängigkeit von einer zuvor erkannten Position des auszuschleusenden Objekts entlang der Förderstrecke, wobei das Maß insbesondere eine Zeitspanne zwischen dem Erkennen der Position und dem Start der Schwenkbewegung sein kann; (iv) ein Maß für die bei der Schwenkbewegung maximal auftretende Auslenkung aus einer Ausgangsstellung des Ausleitelements, wobei das Maß insbesondere ein entsprechender Auslenkwinkel sein kann.

Über das Zusammenspiel zwischen der Verwendung einer Schwenkbewegung anstelle einer linearen Bewegung zur Ausschleusung, dem Antrieb des Ausleitelements mittels eines Elektromotors und einer über die o.g. Parametrisierung optimierten Ansteuerung des Elektromotors, lässt sich eine besonders hohe Energieeffizienz erreichen, so dass auch bei hohen Sortierfrequenzen ein sich über viele Stunden oder Tage hinziehender ununterbrochener Langzeitbetrieb ermöglicht wird, ohne dass die Vorrichtung dabei die Grenzen ihres Betriebsbereichs erreicht. Bei bekannten linearen Antrieben, wie etwa Hubmagneten, tritt dagegen bei hohen Frequenzen typischerweise eine schnelle Erhitzung auf, so dass die Betriebsgrenzen solcher Antriebe schon nach kurzer Zeit erreicht werden und somit entweder eine aufwendige Kühlung oder regelmäßige Pausen erforderlich sind.

Gemäß einer weiteren bevorzugten Ausführungsform weist die Vorrichtung des Weiteren einen Triggersensor auf, der konfiguriert ist, entlang der Förderstrecke zur Ausschleusungseinheit hin geförderte Objekte jeweils zu detektieren und wenn ein Objekt detektiert wird, ein das Detektieren kennzeichnendes Triggersignal an die Ausschleusungseinheit auszugeben. Dabei ist die Ausschleusungseinheit konfiguriert, zur selektiven Ausschleusung eines Objekts das Ausleitelement in Abhängigkeit von dem Triggersignal und der Einordnung des Objekts in die Klassifizierung in die Förderstrecke einzuschwenken. Auf diese Weise kann mittels des Triggersensors automatisch die Position eines entlang der Förderstrecke auf das Ausleitelement zubewegten Objekts bestimmt und in Abhängigkeit davon insbesondere der optimale Zeitpunkt zum Start der Schwenkbewegung des Ausleitelements abgeleitet werden. Dazu kann insbesondere die im Zusammenhang mit der unmittelbar vorausgehend beschriebenen Ausführungsform genannte Parametrisierung zur Bestimmung des Zeitpunkts für den Start der Schwenkbewegung in Abhängigkeit von einer zuvor erkannten Position des auszuschleusenden Objekts entlang der Förderstrecke genutzt werden. In einer bevorzugten Variante ist der Triggersensor mit der Inspektionseinheit zu einem Bauteil zusammengefasst.

Gemäß einer weiteren bevorzugten Ausführungsform weist die Vorrichtung des Weiteren einen Prüfsensor auf, der konfiguriert ist, zu detektieren, ob ein gemäß seiner Einordnung in die Klassifizierung zum Ausschleusen vorgesehenes Objekt nach Erreichen des Ausleitelements gemäß wenigstens einem vorbestimmten Kriterium korrekt aus der Förderstrecke entfernt wurde, und ein Prüfsignal auszugeben, das eine korrekte Entfernung und/oder eine nicht korrekt erfolgte Entfernung des Objekts aus der Förderstrecke kennzeichnet. Das Prüfkriterium kann im einfachsten Fall darin bestehen, festzustellen, ob sich das Objekt nach dem Passieren des Ausleitelements noch auf der Fördervorrichtung befindet. Auf diese Weise ist es möglich, Fehler bei der Ausschleusung zu erkennen, bei denen ein eigentlich zur Ausschleusen vorgesehenes Objekt das Ausleitungselement passiert, ohne von diesem korrekt ausgeschleust zu werden.

Gemäß einer bevorzugten Weiterbildung dazu weist die Vorrichtung des Weiteren eine Auswerteeinheit auf, die insbesondere mit der Steuereinheit zusammenfallen kann. Die Auswerteeinheit ist eingerichtet, anhand der von dem Prüfsensor ausgegebenen Prüfsignale eine, absolute oder relative, Auftrittshäufigkeit der Prüfsignale zu ermitteln und falls die Auftrittshäufigkeit eine vorbestimmte, bevorzugt konfigurierbare, Toleranzschwelle überschreitet ein Störungssignal auszugeben. Dass Störungssignal weist somit auf Ausschleusungsfehler bzw. auf eine Abweichung jenseits der Toleranzschwelle hin, und kann somit eine Fehlfunktion der Vorrichtung anzeigen.

Gemäß einer weiteren bevorzugten Ausführungsform weist die Vorrichtung des Weiteren einen Lagesensor auf, der konfiguriert ist, ein Maß für die Auslenkung des Ausleitelements zu detektieren und ein entsprechendes Lagesignal auszugeben. Dabei ist die Vorrichtung konfiguriert, auf Basis des Lagesignals das Ausleitelement in eine vordefinierte Ausgangsstellung zu zurückzuführen, aus der heraus seine jeweiligen Schwenkbewegungen zum selektiven Ausschleusen von Objekten aus der Förderstrecke erfolgen. Auf diese Weise ist es möglich, insbesondere im Rahmen einer erneuten Initialisierung des Antriebs, etwa bei einem Einschalten der Vorrichtung zum Sortieren, zu erkennen, wo sich das Ausleitelement derzeit befindet und dieses gezielt in die Ausgangsstellung zurückzuführen. Dies ist insbesondere dann hilfreich, wenn die Ausgangsstellung nicht auf andere Weise, etwa mittels eines Anschlags definiert ist, sondern über eine entsprechende Ansteuerung des Antriebs des Ausleitelements gezielt angefahren werden muss. Im einfachsten Fall ist der Lagesensor nur konfiguriert festzustellen, ob sich das Ausleitelement bereits in der Ausgangsstellung befindet.

Gemäß einer weiteren bevorzugten Ausführungsform weist das Ausleitelement die Form einer Nocke, insbesondere ähnlich der typischen Form der Nocken einer Nockenwelle eines Kraftfahrzeugmotors, auf. Diese Form des Ausleitelements ist besonders geeignet, da sich zum einen ihre linearen Konturabschnitte gut zur Impulsübertragung auf die Objekte vorgesehenen Oberflächenabschnitt eignen, weil zumindest bei kleineren Variationen der Position des Berührungskontakts mit den auszuschleusenden Objekten nur vernachlässigbare Auswirkungen auf den resultierenden Gesamtimpuls der Objekte ergeben. Zum anderen können aufgrund der Kreissymmetrie an den runden Konturabschnitten der Nocke unnötige Trägheitsmomente vermieden werden, was die leichte Bewegbarkeit des Ausleitelements fördert und somit zu einer besonderen Eignung dieser Form für die Erreichung hoher Durchsätze und hoher Energieeffizienz führt.

Gemäß einer weiteren bevorzugten Ausführungsform weist das Ausleitelement zumindest auf seinem zur Impulsübertragung auf die Objekte vorgesehenen Oberflächenabschnitt, eine Kontur auf, die frei von Kanten, Ecken und Vorsprüngen ist. Insbesondere können dazu gegebenenfalls den Oberflächenabschnitt begrenzende Kanten abgerundet sein. Auf diese Weise wird gezielt möglichen Beschädigungen der Objekte während der Impulsübertragung von dem Ausleitelement auf das Objekt bei der Schwenkbewegung vorgebeugt.

Gemäß einer weiteren bevorzugten Ausführungsform ist das Ausleitelement so konfiguriert, dass seine Schwenkbewegung um eine reale oder virtuelle Achse erfolgt und der zur Impulsübertragung auf die scheibenförmigen Objekte vorgesehene Oberflächenabschnitt des Ausleitelements in einer parallel zu der Achse verlaufenden Richtung eine Höhe aufweist, die wenigstens der Dicke der zur Sortierung vorgesehenen scheibenförmigen Objekte entspricht. So besteht beim Übertrag des mechanischen Impulses von dem Ausleitelement auf das auszuschleusende Objekt ein Berührungskontakt zwischen dem Ausleitelement und dem Objekt über dessen gesamte Dicke hinweg. Auch dies kann dazu beitragen, den beim Berührungskontakt während der Impulsübertragung auftretenden Druck auf das auszuschleusende Objekt zu verringern, und somit möglichen Beschädigungen des Objekts vorzubeugen.

Gemäß einer weiteren bevorzugten Ausführungsform ist der zur Impulsübertragung auf die auszuschleusenden Objekte vorgesehenen Oberflächenabschnitt des Ausleitelements aus einem Material gefertigt oder mit einem Material beschichtet, dessen Elastizitätsmodul geringer ist als derjenige der zur Sortierung vorgesehenen Objekte. Insbesondere kann der Elastizitätsmodul deutlich, bevorzugt um wenigstens eine Größenordnung, geringer sein, als derjenige typischerweise zur Herstellung von Münzen verwendeter Materialien, wie etwa von Kupfer- und/oder Nickellegierungen. Auch dies trägt zur Vorbeugung gegenüber möglichen Beschädigungen während der Impulsübertragung von Ausleitelement auf das auszuschleusende Objekt bei.

Gemäß einer weiteren bevorzugten Ausführungsform ist das Ausleitelement so konfiguriert, dass dabei sein zur Impulsübertragung auf die Objekte vorgesehener Oberflächenabschnitt schon unmittelbar vor dem Berührungskontakt mit einem auszuschleusenden Objekt eine entgegen der Förderrichtung gerichtete Bewegungskomponente aufweist. Auf diese Weise ist es insbesondere einfach möglich, die auszuschleusenden Objekte um große Winkel, insbesondere um 90°, gegenüber der Richtung der Förderstrecke zur Ausschleusung abzulenken.

Gemäß einer weiteren bevorzugten Ausführungsform beträgt der bei der Schwenkbewegung des Ausleitelements erreichte maximale Auslenkwinkel des Ausleitelements aus seiner Ausgangsstellung höchstens 40 Grad, bevorzugt höchstens 30 Grad, besonders bevorzugt höchstens 20 Grad. Auf diese Weise kann die Auslenkung auf ein geringes Maß beschränkt werden, was zu einer schnelleren Rückführung des Ausleitelements und somit zu einem höheren Durchsatz von Objekten beim Sortieren genutzt werden kann. Außerdem begünstigen geringere Auslenkwinkel die Energieeffizienz der Vorrichtung und somit auch deren Fähigkeit, für lange Zeit ununterbrochen in Betrieb zu sein.

Gemäß einer weiteren bevorzugten Ausführungsform ist die Vorrichtung eingerichtet 20 oder mehr der Objekte, bevorzugt 25 oder mehr der Objekte pro Sekunde zu sortieren. Das entsprechende Einrichten der Vorrichtung kann neben dem Vorsehen einer entsprechende Transportgeschwindigkeiten erlaubenden Fördervorrichtung insbesondere eine ausreichende Dimensionierung der Leistung des Antriebs des Ausleitelements für derart häufige und schnelle Schwenkbewegungen, das Vorsehen entsprechend kleiner Auslenkwinkel und/oder einer möglichst geringen Trägheit des Ausleitelements, sowie eine entsprechend hochfrequente Ansteuerung des Antriebs des Ausleitelements sowie gegebenenfalls einer vorgeschalteten Inspektion zur Einordnung der zu sortierenden Objekte in die Klassifikation umfassen.

Gemäß einer weiteren bevorzugten Ausführungsform ist entlang der Förderstrecke der Ausschleusungseinheit nachfolgend wenigstens eine weitere, bevorzugt gleichartige, Ausschleusungseinheit zum selektiven Ausschleusen von einzelnen der entlang der Förderstrecke geförderten Objekte in Abhängigkeit von wenigsten zwei Klassen der für die Objekte jeweils zuvor bestimmten Einordnung in die Klassifizierung vorgesehen. Eine oder mehrere solcher weiteren Ausschleusungseinheit können insbesondere dazu verwendet werden, im Sinne einer Nachsortierung zwar als Gutteile eingeordnete aber fehlerhaft von der bzw. den vorgeschalteten Ausschleusungseinheiten nicht korrekt ausgeschleuste Objekte nachträglich auszuschleusen. Zum anderen kann diese Ausführungsform jedoch auch vorteilhaft eingesetzt werden, um eine Sortierung in mehr als zwei Klassen zu erreichen, wobei jede der Auslosungseinheiten die einer bestimmten Klasse der Klassifikation zugeordneten Objekte ausgeschleust. Beispielsweise könnten die Objekte im Rahmen der Klassifikation in verschiedene Qualitätsklassen eingeordnet werden, sodass jede Ausschleusungseinheit die einer bestimmten Qualitätsklasse zugeordneten Objekte ausgeschleust und sich somit in Summe durch die Mehrzahl der Ausschleusungseinheiten eine Sortierung in die verschiedenen Qualitätsklassen bewerkstelligen lässt.

Ein zweiter Aspekt der Erfindung betrifft ein Verfahren zum Sortieren von scheibenförmigen Objekten, ausgewählt aus der Gruppe bestehend aus Münzen, Wertchips, Token, Jetons und Medaillen. Das Verfahren weist die folgenden Schritte auf: (i) Fördern von vereinzelten scheibenförmigen Objekte entlang einer Förderstrecke; und (ii) Selektives Ausschleusen, mittels eines schwenkbaren Ausleitelements, von bestimmten der entlang der Förderstrecke geförderten Objekte in Abhängigkeit von einer für die Objekte jeweils zuvor bestimmten Einordnung in eine Klassifizierung, die zwischen Gutteilen und Mangelteilen unterscheidet. Dabei wird das Ausleitelement zum Ausschleusen eines Objekts mittels eines Antriebs so in die Förderstrecke eingeschwenkt, dass es mittels der Schwenkbewegung, d.h. dynamisch und nicht nur statisch wie etwa bei einem zum Berührungszeitpunkt mit dem Objekt feststehenden Ausleitelement, einen mechanischen Impuls auf das auszuschleusende Objekt überträgt. Die Richtung des Impulses bezüglich der Bewegungsrichtung des Objekts zum Zeitpunkt des Impulsübertrags weist sowohl eine senkrecht gerichtete als auch eine anti-parallel gerichtete Impulskomponente auf, die so gewählt sind, dass durch den Impuls die Bewegungsrichtung des Objekts geändert und dieses dadurch aus der Förderstrecke ausgeschleust wird. Dabei erfolgt eine Sortierung von Gutteilen und Mangelteilen derart, dass nur solche der geförderten Objekte mittels des Ausleitelements ausgeschleust werden, welche gemäß der Klassifizierung als Gutteile eingeordnet wurden. Das Ausleitelement muss bei seiner Schwenkbewegung zunächst eine von Null verschiedene Auslenkung aus seiner Ausgangsstellung ausführen, bevor das Ausleitelement mit einem ausgerichteten auszuschleusenden Objekt zur Übertragung des mechanischen Impulses in Berührungskontakt kommen kann.

Nachfolgend werden bevorzugte Ausführungsformen des Verfahrens und deren Weiterbildungen beschrieben, die wiederum jeweils, soweit dies nicht ausdrücklich ausgeschlossen wird, beliebig miteinander sowie mit dem vorausgehend beschriebenen ersten Aspekt der Erfindung kombiniert werden können. Da das Verfahren ein Arbeitsverfahren darstellt, das zur Funktion der Vorrichtung gemäß dem ersten Aspekt Erfindung korrespondiert, gilt das vorausgehend zur Vorrichtung, insbesondere zu den jeweils korrespondierenden Ausführungsformen und deren Weiterbildungen Gesagte für das Verfahren und dessen Ausführungsformen bzw. Weiterbildungen entsprechend.

Gemäß einer ersten bevorzugten Ausführungsform des Verfahrens weist dieses als weitere Schritte ein sensorisches Inspizieren der jeweils entlang der Förderstrecke geförderten Objekte; ein Einordnen der geförderten Objekte, jeweils in Abhängigkeit vom Ergebnis ihrer Inspektion, in die Klassifizierung; und ein Kommunizieren der Einordnungen an eine Ansteuerung des Ausleitelements auf.

Gemäß einer weiteren bevorzugten Ausführungsform wird zum Antrieb des Ausleitelements ein Servomotor verwendet, der so mittels entsprechender Steuersignale angesteuert wird, dass das Ausleitelement veranlasst wird, in Abhängigkeit von der für die geförderten Objekte jeweils zuvor bestimmten Einordnung in die Klassifizierung selektiv als Gutteile eingeordnete Objekte mittels der Schwenkbewegung auszuschleusen.

Gemäß einer weiteren bevorzugten Ausführungsform wird die Schwenkbewegung des Ausleitelements an den Typ der zu sortierenden Objekte mittels einer Einstellung von zumindest einem, bevorzugt sämtlicher, der folgenden Parameter der Schwenkbewegung angepasst: (i) Ein Maß für die Beschleunigung des Ausleitelements bzw. für die diese bewirkende Kraft; (ii) ein Maß für die nach erfolgter Beschleunigung und vor dem Berührungskontakt des Ausleitelements mit dem auszuschleusenden Objekt erreichte Endgeschwindigkeit des Ausleitelements; (iii) ein Maß zur Bestimmung des Zeitpunkts für den Start der Schwenkbewegung in Abhängigkeit von einer zuvor erkannten Position des auszuschleusenden Objekts entlang der Förderstrecke; (iv) ein Maß für die bei der Schwenkbewegung maximal auftretende Auslenkung aus einer Ausgangsstellung des Ausleitelements.

Gemäß einer weiteren bevorzugten Ausführungsform weist das Verfahren als weiteren Schritt ein Detektieren der jeweils entlang der Förderstrecke zur Ausschleusungseinheit hin geförderte Objekte auf. Dabei wird zum selektiven Ausschleusen eines Objekts das Ausleitelement in Abhängigkeit von einem das Detektieren des Objekts kennzeichnenden Triggersignal und der Einordnung des Objekts in die Klassifizierung in die Förderstrecke eingeschwenkt.

Gemäß einer weiteren bevorzugten Ausführungsform weist das Verfahren als weitere Schritte auf: Detektieren, ob ein gemäß seiner Einordnung in die Klassifizierung zum Ausschleusen vorgesehenes Objekt nach Erreichen des Ausleitelements gemäß wenigstens einem vorbestimmten Kriterium korrekt aus der Förderstrecke entfernt wurde, und Ausgeben eines Prüfsignals, das eine korrekte Entfernung und/oder eine nicht korrekt erfolgte Entfernung des Objekts aus der Förderstrecke kennzeichnet.

Gemäß einer weiteren bevorzugten Weiterbildung dazu wird anhand der Prüfsignale eine Auftrittshäufigkeit der Prüfsignale ermittelt, und falls die Auftrittshäufigkeit eine vorbestimmte Toleranzschwelle überschreitet, wird ein Störungssignal ausgegeben.

Gemäß einer weiteren bevorzugten Ausführungsform weist das Verfahren als weitere Schritte auf: Detektieren eines Maßes für die Auslenkung des Ausleitelements und Ausgeben eines entsprechenden Lagesignals; und Zurückführendes Ausleitelements, auf Basis des Lagesignals, in eine Ausgangsstellung, aus der heraus seine jeweiligen Schwenkbewegungen zum selektiven Ausschleusen von Objekten aus der Förderstrecke erfolgen.

Gemäß einer weiteren bevorzugten Ausführungsform weist das Verfahren als weitere Schritt auf: Ausrichten der zum Ausleitelement hin geförderten Objekte entlang einer entlang der Förderstrecke verlaufenden Ausrichtungslinie.

Gemäß einer weiteren bevorzugten Ausführungsform werden bei dem Verfahren 20 oder mehr, bevorzugt 25 oder mehr der Objekte pro Sekunde mittels der in Abhängigkeit in die Einordnungen der Objekte in die Klassifikation erfolgenden selektiven Ausschleusung sortiert. Diese Ausführungsform ist insbesondere für Münzen mit einem Gewicht von 3 Gramm oder weniger und einem Durchmesser von 20 mm oder weniger erreichbar.

Gemäß einer weiteren bevorzugten Ausführungsform erfolgt dem selektiven Ausschleusen nachfolgend wenigstens ein weiteres selektives Ausschleusen von einzelnen der entlang der Förderstrecke geförderten Objekte in Abhängigkeit von wenigsten zwei Klassen der für die Objekte jeweils zuvor bestimmten Einordnung in die Klassifizierung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
- **Fig.** 1: in einer schematischen Blockdarstellung eine Vorrichtung zum Sortieren von scheibenförmigen Objekten, insbesondere Münzen, gemäß einer bevorzugten Ausführungsform der Erfindung;
- **Fig. 2**: eine Vorrichtung zum Sortieren von scheibenförmigen Objekten gemäß einer bevorzugten Ausführungsform der Erfindung mit einer Fördervorrichtung und einer Ausschleusungseinheit, in einer perspektivischen Draufsicht auf die Oberseite der Vorrichtung;
- **Fig. 3**: dieselbe Vorrichtung aus Fig. 2, jedoch in einer perspektivischen Draufsicht auf ihre Unterseite, wobei die Fördervorrichtung nicht dargestellt wurde, um den Blick auf die Ausschleusungseinheit freizugeben;
- **Fig. 4**: eine Detailansicht zur Illustration der Impulsübertragung von dem Ausleitelement auf ein auszuschleusendes Objekt, insbesondere eine Münze, bei der Vorrichtung aus Fig. 2 und 3; und
- **Fig. 5**: ein Flussdiagramm zur Veranschaulichung einer bevorzugten Ausführungsform des erfindungsgemäßen Verfahrens.

In den nachfolgenden Figuren, werden durchgängig dieselben Bezugszeichen für dieselben oder einander entsprechende Elemente der Erfindung verwendet.

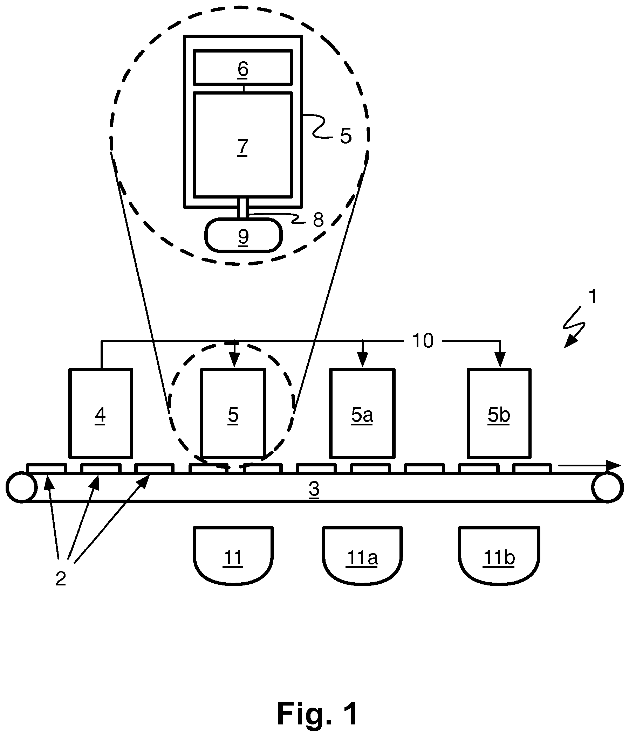

Zunächst wird zu Erläuterung der grundsätzlichen Struktur der erfindungsgemäßen Vorrichtung auf **Fig. 1** und die dort gezeigte bevorzugte Ausführungsform Bezug genommen. Die gezeigte Vorrichtung 1 zum Sortieren von scheibenförmigen Objekten 2, insbesondere von Münzen, weist eine Fördervorrichtung 3 auf, die insbesondere - wie dargestellt - mittels eines Transportbandes oder Transportriemenausgebildet sein kann. Die Transportvorrichtung 3 dient dazu, die bereits vereinzelten Objekte 2 seriell entlang einer entsprechenden Förderstrecke zu verschiedenen Stationen der Vorrichtung 1 zu transportieren. Als eine erste Station ist eine Inspektionseinheit 4 vorgesehen, die mittels eines oder mehrerer Sensoren die auf der Fördervorrichtung 3 geförderten Objekte 2 jeweils erfasst und bezüglich wenigstens eines Kriteriums inspiziert, um eine Einordnung des jeweiligen Objekts 2 in eine Klassifikation vorzunehmen, die zwischen Gutteilen und Mangelteilen unterscheidet. Im einfachsten Fall weist die Klassifikation nur zwei Klassen auf, eine für Gutteile, und eine für Mangelteile. Im vorliegenden Fall einer Mehrfachausschleusung ist es jedoch zweckmäßig, dass die Klassifikation mehr Klassen, hier bevorzugt vier Klassen aufweist. Das mindestens eine Kriterium, gemäß dem die Objekte 2 als Gutteile oder Mangelteile eingeordnet werden, kann sich insbesondere darauf beziehen, ob das entsprechende Objekt 2 beschädigungsfrei oder echt ist oder einem vorgegebenen Objekttyp entspricht. Soweit es sich bei den Objekten 2 speziell um Münzen handelt, kann das mindestens eine Kriterium insbesondere zusätzlich oder alternativ zur Unterscheidung verschiedener Sorten und/oder Nennwerte geeignet sein, was eine entsprechende Sortierung der Münzen erlaubt.

Als weitere Station entlang der Förderstrecke ist eine (erste) Ausschleusungseinheit 5 vorgesehen, die mit der Inspektionseinheit 4 über eine Kommunikationsstrecke 10 signalverbunden ist und darüber die von der Inspektionseinheit 4 vorgenommenen und kommunizierten Einordnungen der Objekte 2 in die Klassifikation empfängt. Zum Zwecke der Illustration ist die Ausschleusungseinheit 5 im oberen Teil der Figur 1 nochmals in größerem Detail dargestellt. Die Ausschleusungseinheit 5 weist einen Servomotor 7 auf, der mittels einer Steuereinheit 6 ansteuerbar ist, und an dem über die angetriebene Welle 8 des Servomotors ein Ausleitelement 9 in Form einer Nocke angeordnet ist. Wahlweise kann die Steuereinheit wie in Fig. 1 dargestellt als Teil der Ausschleusungseinheit ausgeführt sein oder aber separat davon (nicht gezeigt). Das Ausleitelement 9 ist konfiguriert, bei einer entsprechenden Ansteuerung des Servomotors 7 durch die Steuereinheit 6 in eine Schwenkbewegung versetzt zu werden, mittels derer es in die Förderstrecke eintaucht und in Berührungskontakt mit einem dort vorhandenen auszuschleusenden Objekt 2 kommt, um einen mechanischen Impuls auf dieses zu übertragen und es so aus der Förderstrecke auszuschleusen. Der Ausschleusungseinheit 5 ist ein Auffangbehälter 11 zugeordnet, der so angeordnet ist, dass er die mittels der Ausschleusungseinheit 5 ausgeschleusten Objekte 2 auffangen und sammeln kann.

Wenn nun beim Betrieb der Vorrichtung 1 an der Inspektionseinheit 4 erkannt wird, dass ein bestimmtes Objekt 2 als Gutteil gemäß der Klassifikation einzuordnen ist, so wird dies über die Kommunikationsstrecke 10 an die Ausschleusungseinheit 5 kommuniziert, woraufhin deren Steuereinheit 6 den Servomotor 7 so ansteuert, dass dieser das Ausleitelement 9 in eine Schwenkbewegung zum Ausschleusen des Objekts 2 aus der Förderstrecke versetzt. Das ausgeschleuste Objekt 2 wird im Auffangbehälter 11 aufgefangen und zusammen mit weiteren zuvor oder danach ausgeschleusten Gutteilen gesammelt. Solche Objekte 2, die dagegen von der Inspektionseinheit 4 nicht als in Bezug auf die Ausschleusungseinheit 5 definierte Gutteile gemäß der Klassifikation eingeordnet wurden, passieren die Ausschleusungseinheit 5 entlang der Förderstrecke, ohne dass es zu einer Ausschleusung des entsprechenden Objekts 2 kommt. Bei der in Fig. 1 gezeigten Ausführungsform sind optional als weitere Stationen zwei zusätzliche Ausschleusungseinheiten 5a und 5b jeweils mit einem entsprechenden Auffangbehälter 11a bzw. 11b vorgesehen. Bevorzugt, aber nicht zwingend, entsprechen Aufbau und Funktion dieser weiteren Ausschleusungseinheiten denen der ersten Ausschleusungseinheit 5. Im vorliegenden Ausführungsbeispiel werden die Objekte 2 von der Inspektionseinheit 4 in vier verschiedene Qualitätsklassen eingeordnet, sodass jeder der drei Ausschleusungseinheiten 5, 5a und 5b eine dieser Qualitätsklassen zugeordnet ist und eine Ausschleusung der Objekte 2 gemäß dieser drei Qualitätsklassen erfolgt. Die bleibende vierte Qualitätsklasse ist keiner der Ausschleusungen zugeordnet und bezieht sich somit auf diejenigen Objekte 2, die nach Durchlaufen der letzten Ausschleusungseinheit 5b noch auf der Fördervorrichtung 3 verblieben sind. Diese können optional am Ende der Förderstrecke ebenfalls in einem entsprechenden Auffangbehälter (nicht dargestellt) erfasst und gesammelt werden. Die unterschiedlichen Qualitätsklassen könnten sich beispielsweise auf den Grad oder die Art der Beschädigung, bzw. speziell im Falle von Münzen auch auf deren Nominalwert oder Sorte beziehen.

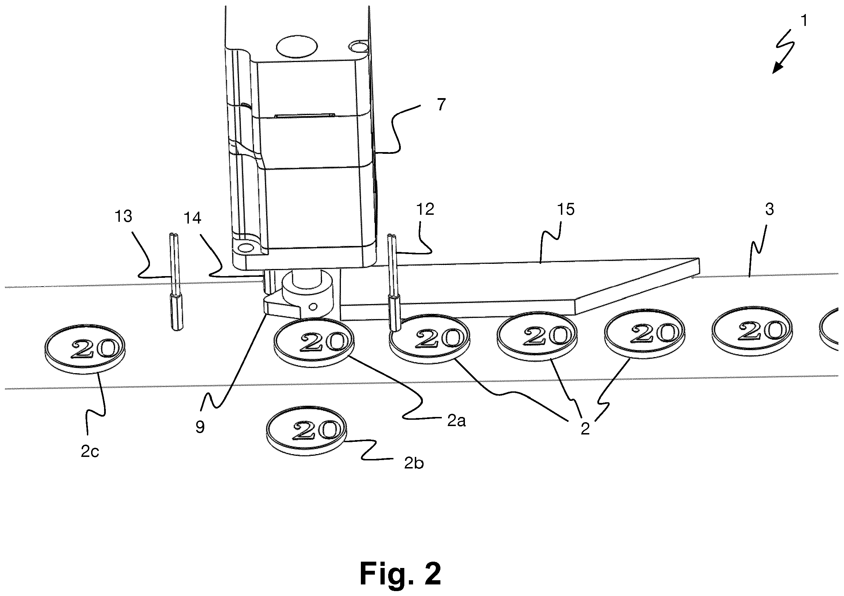

In **Fig. 2** ist eine erfindungsgemäße Vorrichtung mit einer als Förderband ausgebildeten Fördervorrichtung 3 und einer Ausschleusungseinheit 5 gemäß einer bevorzugten Ausführungsform der Erfindung in einer perspektivischen Draufsicht auf ihre Oberseite gezeigt. Bei den Objekten 2 handelt es sich hier speziell um Münzen, mit einem Nominalwert von 20, beispielsweise von 0,20 €. Die Förderrichtung der Münzen entlang der im Zentrum des Förderbandes verlaufenden Förderrichtung verläuft hier in Fig. 2 von rechts nach links.

Nach dem Durchlaufen der Inspektionseinheit (nicht gezeigt) erreichen die Münzen eine Ausrichtungsvorrichtung 15 in Form eines Führungsblechs mit einer Schräge, welche die Wirkung hat, die Münzen mit einer der Schräge anschließenden geraden Kante des Führungsblechs fluchtend entlang der Förderrichtung auszurichten, um eine Abweichung der Position der Münzen bezüglich der in der Ebene des Förderbandes senkrecht zur Förderrichtung verlaufenden Richtung zumindest weitgehend zu vermeiden.

Im Anschluss an die Ausrichtungsvorrichtung ist ein Triggersensor 12 zur Erfassung der Ankunft eines entlang der Förderrichtung geförderten Objekts 2 vorgesehen, bei dem es sich insbesondere um einen optischen Sensor handeln kann. Der Triggersensor 12 ist eingerichtet, bei detektierter Ankunft eines Objekts 2 ein entsprechendes Triggersignal an die Steuereinheit 6 der Ausschleusungseinheit 5 zu senden, von der hier zur Vereinfachung nur der Servomotor 7 dargestellt ist. Die Steuereinheit 6 ist eingerichtet, daraufhin den Servomotor 7 so anzusteuern, dass dieser das Ausleitelement 9 in Form einer Nocke nach Ablauf einer vorbestimmten Zeitspanne nach Empfang des Triggersignals in eine Schwenkbewegung zur Ausschleusung der inzwischen beim Ausleitelement 9 angelangten Münze 2a versetzt, wenn diese Münze zuvor als Gutteil eingeordnet wurde. Die ebenfalls dargestellte Münze 2b wurde bereits zuvor ausgeschleust. Die Münze 2c hat die Ausschleusungseinheit passiert ohne ausgeschleust zu werden. Zu weiteren Einzelheiten des Betriebs der Vorrichtung wird auf die im Weiteren folgende Erläuterung des erfindungsgemäßen Verfahrens verwiesen.

Außerdem weist die Vorrichtung einen Prüfsensor 13 auf, der bezogen auf die Förderrichtung dem Ausleitelement 9 nachfolgend angeordnet ist. Der Prüfsensor 13 ist dazu vorgesehen, an seiner Position noch auf dem Förderband 3 befindliche Münzen 2 zu detektieren und an die Steuereinheit 6 entsprechende Prüfsignale zu senden. Auf diese Weise kann erkannt werden, ob eine eigentlich zur Ausschleusung vorgesehene Münze 2a fehlerhaft nicht ausgeschleust wurde, obwohl sie zuvor als Gutteil eingeordnet wurde.

Zusätzlich ist ein Lagesensor 14 im Bereich des Ausleitelements 9 vorgesehen, der dazu dient, dessen aktuelle Auslenkung zu erfassen. In einer einfachen Version ist der Lagesensor 14 nur dazu ausgelegt, zu erfassen, ob sich das Ausleitelement 9 in einer definierten Ausgangsstellung (wie in Fig. 2 gezeigt) befindet. Mithilfe des Lagesensors können bei einem Initialisieren der Vorrichtung 1 im Zusammenspiel mit der Steuereinheit 6 der Servomotor 7 und somit das damit gekoppelte Ausleitelement 9 in die Ausgangsstellung überführt werden, um eine definierte Ausgangssituation für den nachfolgenden Betrieb der Vorrichtung 1 zum Sortieren von Objekten bzw. Münzen 2 zu schaffen.

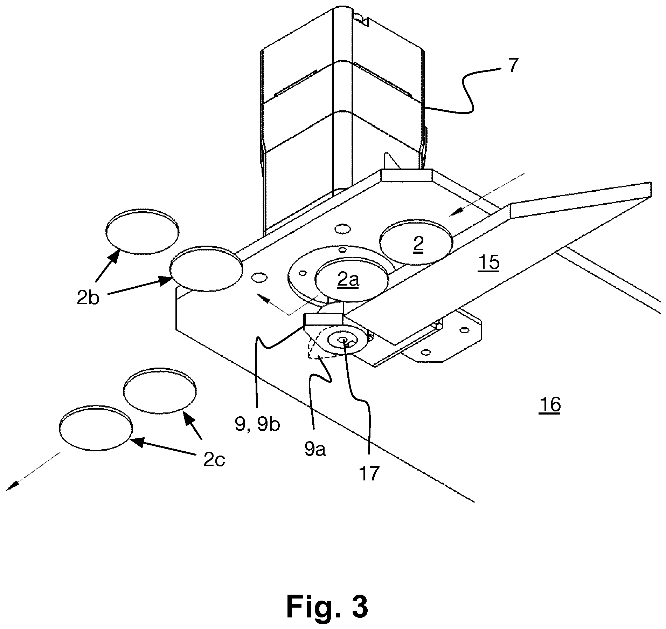

**Fig.** 3 zeigt dieselbe erfindungsgemäße Vorrichtung aus Fig. 2, jedoch in einer perspektivischen Draufsicht auf ihre Unterseite. Dabei wurde die Fördervorrichtung nicht dargestellt, um den Blick auf die Ausschleusungseinheit freizugeben. Die als freischwebend erscheinenden Objekte bzw. Münzen 2, 2a, 2b und 2c liegen dementsprechend eigentlich auf dem Transportband 3. Bei dieser Ansicht sind die gestrichelt gezeigte Ausgangsstellung 9a des Ausleitelements 9 sowie seine mittels durchgezogener Linien dargestellte Ausschwenkposition 9b im Detail dargestellt.

Das Ausleitelement 9 ist so gegenüber der durch das Führungsblech 15 definierten Ausrichtungslinie der Münzen versetzt angeordnet, dass bei seiner Schwenkbewegung zunächst eine von Null verschiedene Auslenkung aus seiner Ausgangsstellung erfolgen muss, bevor das Ausleitelement mit einem derart ausgerichteten auszuschleusenden Objekt zur Übertragung des mechanischen Impulses in Berührungskontakt kommen kann. Auf diese Weise, werden unbeabsichtigte, durch Berührung mit dem Ausleitelement bewirkte, Ablenkungen von gemäß ihrer Einordnung in die Klassifikation nicht zur Ausschleusung vorgesehenen Objekten bzw. Münzen 2 auf einfache Weise vermieden. Bei den Objekten bzw. Münzen 2c handelt es sich um als Mangelteile eingeordnete Teile, die von der Auslosungseinheit 5 daher nicht ausgeschleust wurden, und auf dem Transportband 3 verblieben sind. Zusätzlich sind in Fig. 3 die Drehachse 13 des Ausleitelements 9, die mit der angetriebenen Welle 8 des Servomotor 7 zusammenfällt, sowie eine Platte 16, auf der die Ausschleusungseinheit sowie die Ausrichtungsvorrichtung 15 montiert sein können, dargestellt. Die Platte 16 und die Ausschleusungseinheit 5 können bevorzugt auf einem verstellbaren Schlitten angeordnet und entlang und/oder senkrecht zur Fördervorrichtung 3 verschiebbar sein. Diese Verschiebbarkeit kann insbesondere abhängig von den Eigenschaften der zu sortierenden Objekte konfigurierbar sein.

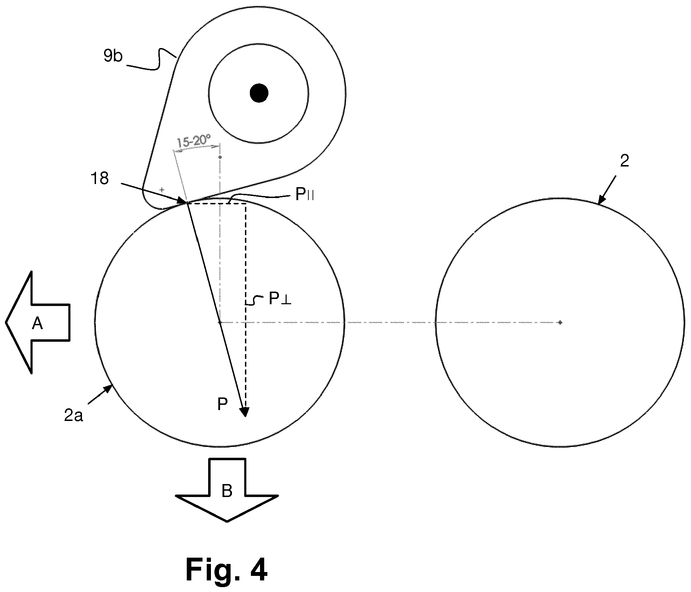

In **Fig. 4** ist zur Illustration der Impulsübertragung von dem Ausleitelement 9 auf ein auszuschleusendes Objekt 2a bei der Vorrichtung aus Fig. 2 und 3 eine entsprechende Detailansicht dargestellt. Wieder verläuft die Förderrichtung A der Objekte 2 von rechts nach links und gegenwärtig hat das Objekt 2a das Ausleitelement 9 erreicht, welches sich zum Zeitpunkt des Impulsübertrags, wie dargestellt, bereits in einer Auslenkposition 9b befindet und mit dem Objekt 2a an einer Kontaktfläche in Berührungskontakt 18 steht. Bevorzugt weist das Ausleitelement, bzw. sein für den Berührungskontakt vorgesehener Oberflächenabschnitt, in einer parallel zur Drehachse verlaufenden Richtung eine Höhe auf, die zumindest der entsprechenden Höhe bzw. Dicke der zu sortierenden Objekte 2 entspricht, so dass die Fläche des Berührungskontakts möglichst groß ausfällt, was zur Vermeidung von Beschädigungen vorteilhaft ist. Zusätzlich kann das Material des Ausleitelements 9 zumindest im Bereich dieses Oberflächenabschnitts elastisch sein und einen Elastizitätsmodul aufweisen, der geringer ist, als der der zu sortierenden scheibenförmigen Objekte (insbesondere an deren Umfang). Das Ausleitelement 9 führt eine Schwenkbewegung um die Drehachse 13 entgegen dem Uhrzeigersinn aus und überträgt zum Zwecke der Ausschleusung des Objekts 2a über dem Berührungskontakt 18 einen mechanischen Impuls P auf das Objekt 2a. Dabei weist dieser Impuls P bezogen auf die der Förderrichtung A entsprechenden Bewegungsrichtung des Objekts 2a unmittelbar vor Herstellung des Berührungskontakts 18 sowohl eine senkrecht zur Förderrichtung bzw. Objektbewegung verlaufende Impulskomponente P⊥ als auch eine anti-parallel dazu verlaufende Impulskomponente P_{||} auf. Durch Beaufschlagung des bereits aufgrund der Förderung entlang der Förderstrecke vorhandenen Impulses mit dem zusätzlich übertragenen Impuls P ergibt sich ein resultierender Impuls, bzw. eine geänderte Bewegungsrichtung B, des auszuschleusenden Objekts 2a, der bzw. die bei entsprechender Konfiguration des Ausschleusungsvorgangs insbesondere senkrecht zur Förderrichtung verlaufen kann. Auf diese Weise kann die bereits vor dem Impulsübertrag vorhandene Bewegungsenergie des Objekts 2a zur Ausschleusung genutzt werden, ohne dass sämtliche dazu erforderliche Bewegungsenergie von der Ausschleusungseinheit 5 aufgebracht werden muss.

Bevorzugt ist die Schwenkbewegung, etwa anhand ihrer Beschleunigung und Endgeschwindigkeit, ihres Auslösungszeitpunkts und/oder ihres maximalen Auslenkungswinkels als Parameter einstellbar, sodass eine im Sinne der Energieeffizienz und Zuverlässigkeit der Ausschleusung optimale Einstellung und Anpassung an die Art der zu sortierenden Objekte 2 ermöglicht ist.

Das Ausleitelement und dessen Schwenkbewegung können insbesondere so konfiguriert sein, dass im Falle, dass die zu sortierenden scheibenförmigen Objekte eine zumindest im Wesentlichen kreisrunde Geometrie aufweisen, wie dies bei Münzen regelmäßig der Fall ist, sich der bei der Ausschleusung auftretende Berührungskontakt 18 zwischen dem Ausleitelement 9 und dem auszuschleusenden Objekt 2a über nicht mehr als ein Viertelkreissegment des kreisförmigen Umfangs des Objekts erstreckt.

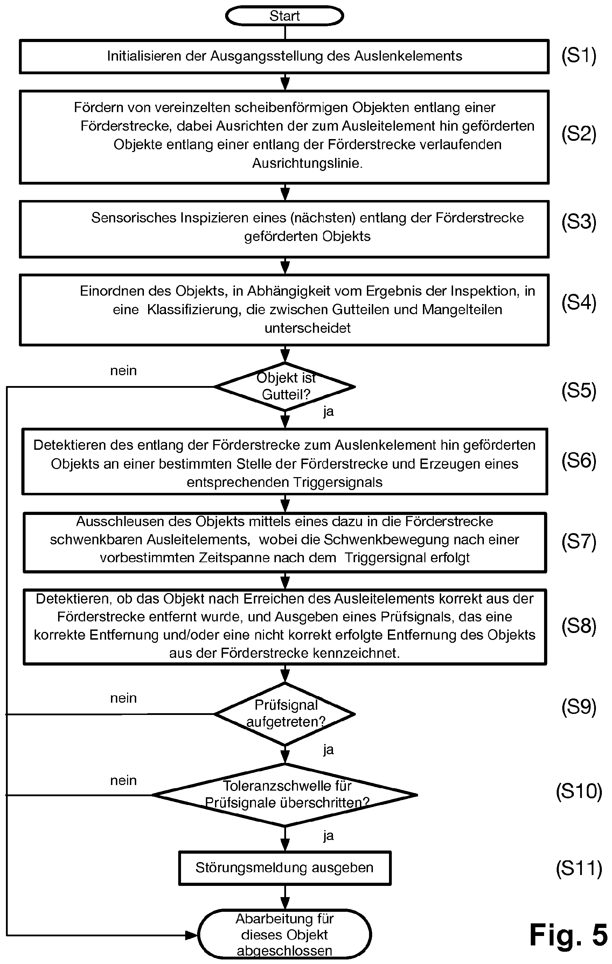

Zur weiteren Veranschaulichung der Funktionsweise der erfindungsgemäßen Vorrichtung sowie des erfindungsgemäßen Verfahrens gemäß bevorzugter Ausführungsformen ist in **Fig. 5** ein Flussdiagramm dargestellt. Dabei werden beispielhaft Bezüge zu den vorausgehen beschriebenen Ausführungsformen der Vorrichtung 1 hergestellt, ohne dass dies als Einschränkung zu verstehen wäre. Anhand des Flussdiagramms wird im Folgenden ein beispielhafter Ablauf vom Start der Vorrichtung, bis zur Sortierung eines ersten Objekts 2 beschrieben.

Das Verfahren beginnt mit dem Starten der Vorrichtung 1, etwa bei deren Einschalten, woraufhin ein Initialisierungsschritt S1 zum Verbringen des Ausleitelements 9 in seine Ausgangsstellung 9a folgt. Dabei kann insbesondere mittels eines Lagesensors 14 die gegenwärtige Stellung des Ausleitelements 9 erfasst und an die Steuereinheit 6 der Ausschleusungseinheit 5 zurückgemeldet werden, um diese in die Lage zu versetzen, das Ausleitelement 9 mittels einer entsprechenden Ansteuerung des Motors 7 in die vorbestimmte Ausgangsstellung 9a zu überführen, soweit sich das Ausleitelement 9 noch nicht bereits dort befindet.

In einem nachfolgenden Schritt S2, der in der Praxis typischerweise kontinuierlich verläuft, erfolgt ein Fördern von bereits vereinzelten scheibenförmigen Objekten 2, insbesondere Münzen, entlang einer Förderstrecke, die insbesondere durch eine Fördervorrichtung wie etwa ein Transportband 3 implementiert sein kann. Bevorzugt werden die einzelnen Objekte 2 dadurch, wie vorausgehend im Zusammenhang der Ausrichtungsvorrichtung 15 schon beschrieben, entlang einer Ausrichtungsrichtung ausgerichtet. In einem nachfolgenden Schritt S3 wird das Objekt 2 mithilfe wenigstens eines Sensors inspiziert, um in einem weiteren Schritt S4 in Abhängigkeit vom Ergebnis der Inspektion eine Einordnung des Objekts 2 in eine Klassifizierung vorzunehmen, die zwischen Gutteilen und Mangelteilen unterscheidet.

Daraufhin wird in einem weiteren Schritt S5 geprüft, ob dabei das Objekt 2 als Gutteil gemäß der Klassifizierung eingeordnet wurde. Wenn dies nicht der Fall ist (S5 - nein), ist die Abarbeitung des Verfahrens für dieses Objekt 2 bereits abgeschlossen, und es passiert das Ausleitungselement 9, ohne dabei ausgeschleust zu werden. Andernfalls (S5 - ja), wird zu einem Schritt S6 übergegangen, bei dem an einer bestimmten Stelle entlang der Förderstrecke, die noch vor dem Ausleitelement 9 liegt, das Objekt 2 detektiert und ein entsprechendes Triggersignal erzeugt und ausgegeben wird.

In einem weiteren Schritt S7 erfolgt sodann mittels des in die Förderstrecke einschwenkbaren Ausleitelements 9 ein Ausschleusen des Objekts 2, wobei dessen Schwenkbewegung nach einer vorbestimmten Zeitspanne nach dem Triggersignal erfolgt, insbesondere ausgelöst wird. Bevorzugt ist diese Zeitspanne als Parameter einstellbar, um eine optimale Einstellung des Zeitpunkts und der Richtung des Impulsübertrags zwischen dem Ausleitelement 9 und dem Objekt 2 zu ermöglichen.

In einem weiteren Schritt S8 wird schließlich, insbesondere mittels eines entsprechenden Prüfsensors 13, detektiert, ob das aufgrund seiner Einordnung als Gutteil zum Ausschleusen vorgesehene Objekt 2 tatsächlich korrekt aus der Förderstrecke ausgeschleust wurde, oder nicht. Das Ergebnis dieser Prüfung kann, zumindest in dem Fall, dass das Ausschleusen nicht korrekt erfolgte, mittels eines Prüfsignals angezeigt werden. Im nachfolgenden Schritt S9 wird dementsprechend geprüft, ob ein solches Prüfsignal aufgetreten ist bzw. eine inkorrekte Ausschleusung anzeigt und somit ein Fehler beim Ausschleusen vorliegt. Ist dies nicht der Fall (S9 - nein), ist die Aufarbeitung für dieses Objekt 2 abgeschlossen. Andernfalls (S9 - ja) kann optional eine weitere Prüfung dahingehend erfolgen, ob die Gesamtzahl (absolute Häufigkeit) der seit einem Rücksetzen eines entsprechenden Zählers bislang aufgetretenen Prüfsignale eine vorbestimmte Toleranzschwelle überschreitet. Ist dies nicht der Fall (S10 - nein), so ist die Abarbeitung für dieses Objekt 2 abgeschlossen. Andernfalls (S10 - ja), wird zuvor noch in einem zwischengeschalteten weiteren Schritt S11 eine Störungsmeldung ausgegeben. Alternativ kann auch eine auf den Durchsatz bezogenen relative Häufigkeit ermittelt und gegenüber einer entsprechend definierten Toleranzschwelle geprüft werden.

Die Ausgabe der Störungsmeldung kann insbesondere über eine Benutzerschnittstelle erfolgen, mittels der eine Bedienperson das Auftreten der Störung signalisiert werden kann, etwa über eine Anzeigevorrichtung und/oder eine akustische Signalisierung.
In der Praxis läuft das Verfahren (vom ursprünglichen Initialisierungsschritt S1 abgesehen) parallel und zeitversetzt für eine Mehrzahl der zu sortierenden Objekte 2 gleichzeitig ab, sodass beispielsweise zu dem Zeitpunkt der Ausschleusung eines ersten Objekts 2a ein weiteres Objekt 2 gerade gemäß Schritt S3 inspiziert wird und noch weitere Objekte 2 bereits gemäß Schritt S2 entlang der Förderstrecke transportiert werden.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zu Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 1: Vorrichtung zum Sortieren von scheibenförmigen Objekten
- 2: scheibenförmige Objekte, insbesondere Münzen
- 3: Fördervorrichtung, insbesondere Transportband
- 4: Inspektionseinheit
- 5: (erste) Ausschleusungseinheit
- 5a, 5b: weitere Ausschleusungseinheiten
- 6: Steuereinheit, zugleich Auswerteeinheit für Prüfsignale
- 7: Servomotor
- 8: angetriebene Welle
- 9: Ausleitelement
- 10: Kommunikationsstrecke
- 11: Auffangbehälter zur (ersten) Ausschleusungseinheit
- 11 a, b: Auffangbehälter zu den weiteren Ausschleusungseinheiten
- 12: Triggersensor
- 13: Prüfsensor
- 14: Lagesensor
- 15: Ausrichtungsvorrichtung, insbesondere Führungsblech
- 16: Platte
- 17: Drehachse des Ausleitelements
- 18: Berührungskontakt zwischen Ausleitelement und Objekt
- A: Förderrichtung
- B: Ausschleusungsrichtung
- P: übertragener mechanischen Impuls
- P_{⊥}: Impulskomponente von P senkrecht zur Objektbewegung
- P_{||}: Impulskomponente von P anti-parallel zur Objektbewegung

## Patentansprüche

1. Vorrichtung (1) zum Sortieren von scheibenförmigen Objekten (2) ausgewählt aus der Gruppe bestehend aus Münzen, Wertchips, Token, Jetons und Medaillen, aufweisend:
eine Fördervorrichtung (3), die konfiguriert ist, vereinzelte scheibenförmigen Objekte (2) entlang einer Förderstrecke zu fördern; und
eine Ausschleusungseinheit (5) mit einem schwenkbaren Ausleitelement (9) zum selektiven Ausschleusen von einzelnen der entlang der Förderstrecke geförderten Objekte (2) in Abhängigkeit von einer für die Objekte (2) jeweils zuvor bestimmten Einordnung in eine Klassifizierung, die zwischen Gutteilen und Mangelteilen unterscheidet;
wobei das Ausleitelement (9) eingerichtet ist, zum Ausschleusen eines Objekts (2, 2a) mittels eines Antriebs (7) so in die Förderstrecke eingeschwenkt zu werden, dass es mittels der Schwenkbewegung einen mechanischen Impuls (P) auf das auszuschleusende Objekt überträgt, der bezüglich der Bewegungsrichtung des Objekts zum Zeitpunkt des Impulsübertrags sowohl eine senkrecht gerichtete Impulskomponente (P_{⊥}) als auch eine anti-parallel gerichtete Impulskomponente (P_{||}) aufweist, die so gewählt sind, dass durch den Impuls (P) die Bewegungsrichtung des Objekts (2, 2a) geändert und dieses dadurch aus der Förderstrecke ausgeschleust wird;
wobei die Ausschleusungseinheit (5) konfiguriert ist, eine Sortierung von Gutteilen und Mangelteilen derart zu bewirken, dass nur solche der geförderten Objekte (2, 2a) mittels des Ausleitelements ausgeschleust werden, welche gemäß der Klassifizierung als Gutteile eingeordnet wurden; und
wobei die Fördervorrichtung (3) eine Ausrichtungsvorrichtung (15) zum Ausrichten der zum Ausleitelement (9) hin geförderten Objekte (2) entlang einer entlang der Förderstrecke verlaufenden Ausrichtungslinie aufweist, und das Ausleitelement (9) gegenüber dieser Ausrichtungslinie so versetzt angeordnet ist, dass bei seiner Schwenkbewegung zunächst eine von Null verschiedene Auslenkung aus seiner Ausgangsstellung erfolgen muss, bevor das Ausleitelement (9) mit einem derart ausgerichteten auszuschleusenden Objekt (2, 2a) zur Übertragung des mechanischen Impulses (P) in Berührungskontakt (18) kommen kann.

2. Vorrichtung (1) gemäß Anspruch 1, des Weiteren aufweisend:
eine Inspektionseinheit (4), die entlang der Förderstrecke vor dem Ausleitungselement (9) angeordnet und eingerichtet ist, die entlang der Förderstrecke geförderten Objekte (2) jeweils sensorisch zu inspizieren und abhängig vom Ergebnis der Inspektion die geförderten Objekte (2) jeweils in die Klassifizierung einzuordnen und diese Einordnungen an die Ausschleusungseinheit (5) zu kommunizieren.

3. Vorrichtung (1) gemäß einem der vorausgehenden Ansprüche, wobei zum Antrieb des Ausleitelements (9 ein Elektromotor (7) vorgesehen ist, mit dessen angetriebener Welle (8) das Ausleitelement (9) gekoppelt ist.

4. Vorrichtung (1) gemäß Anspruch 3, wobei der Elektromotor (7) ein Servomotor ist und die Ausschleusungseinheit (5) des Weiteren eine Steuereinheit (6) aufweist, die eingerichtet ist, den Servomotor (7) mittels entsprechender Steuersignale anzusteuern, um das von dem Servomotor (7) angetriebene Ausleitelement (9) zu veranlassen, in Abhängigkeit von der für die geförderten Objekte (2) jeweils zuvor bestimmten Einordnung in die Klassifizierung selektiv als Gutteile eingeordnete Objekte mittels der Schwenkbewegung auszuschleusen.

5. Vorrichtung (1) gemäß Anspruch 4, wobei die Steuereinheit (6) zur Anpassung der Schwenkbewegung des Ausleitelements (9) an den Typ der zu sortierenden Objekte (2) so konfigurierbar ist, das zumindest einer der folgenden Parameter der Schwenkbewegung einstellbar ist:
- Ein Maß für die Beschleunigung des Ausleitelements (9) bzw. für die diese bewirkende Kraft;
- ein Maß für die nach erfolgter Beschleunigung und vor dem Berührungskontakt (17) des Ausleitelements (9) mit dem auszuschleusenden Objekt (2, 2a) erreichte Endgeschwindigkeit des Ausleitelements (9);
- ein Maß zur Bestimmung des Zeitpunkts für den Start der Schwenkbewegung in Abhängigkeit von einer zuvor erkannten Position des auszuschleusenden Objekts (2, 2a) entlang der Förderstrecke;
- ein Maß für die bei der Schwenkbewegung maximal auftretende Auslenkung aus einer Ausgangsstellung des Ausleitelements (9).

6. Vorrichtung (1) gemäß einem der vorausgehenden Ansprüche, des Weiteren aufweisend einen Triggersensor (12), der konfiguriert ist entlang der Förderstrecke zur Ausschleusungseinheit (5) hin geförderte Objekte (2) jeweils zu detektieren und wenn ein Objekt (2) detektiert wird, ein das Detektieren kennzeichnendes Triggersignal an die Ausschleusungseinheit (5) auszugeben;
wobei die Ausschleusungseinheit (5) konfiguriert ist, zur selektiven Ausschleusung eines Objekts (2, 2a) das Ausleitelement in Abhängigkeit von dem Triggersignal und der Einordnung des Objekts (2, 2a) in die Klassifizierung in die Förderstrecke einzuschwenken.

7. Vorrichtung (1) gemäß einem der vorausgehenden Ansprüche, des Weiteren aufweisend einen Prüfsensor (13), der konfiguriert ist, zu detektieren, ob ein gemäß seiner Einordnung in die Klassifizierung zum Ausschleusen vorgesehenes Objekt (2, 2a) nach Erreichen des Ausleitelements (9) gemäß wenigstens einem vorbestimmten Kriterium korrekt aus der Förderstrecke entfernt wurde, und ein Prüfsignal auszugeben, das eine korrekte Entfernung und/oder eine nicht korrekt erfolgte Entfernung des Objekts (2, 2a) aus der Förderstrecke kennzeichnet.

8. Vorrichtung (1) gemäß Anspruch 7, des Weiteren aufweisend eine Auswerteeinheit (6), die eingerichtet ist, anhand der von dem Prüfsensor (13) ausgegebenen Prüfsignale eine Auftrittshäufigkeit der Prüfsignale zu ermitteln und falls die Auftrittshäufigkeit eine vorbestimmte Toleranzschwelle überschreitet ein Störungssignal auszugeben.

9. Vorrichtung (1) gemäß einem der vorausgehenden Ansprüche, des Weiteren aufweisend einen Lagesensor (14), der konfiguriert ist, ein Maß für die Auslenkung des Ausleitelements (9) zu detektieren und ein entsprechendes Lagesignal auszugeben,
wobei die Vorrichtung (1) konfiguriert ist, auf Basis des Lagesignals das Ausleitelement (9) in eine vordefinierte Ausgangsstellung (9a) zurückzuführen, aus der heraus seine jeweiligen Schwenkbewegungen zum selektiven Ausschleusen von Objekten (2) aus der Förderstrecke erfolgen.

10. Vorrichtung (1) gemäß einem der vorausgehenden Ansprüche, wobei das Ausleitelement (9) die Form einer Nocke aufweist.

11. Vorrichtung (1) gemäß einem der vorausgehenden Ansprüche, wobei das Ausleitelement (9) zumindest auf seinem zur Impulsübertragung auf die Objekte vorgesehenen Oberflächenabschnitt, eine Kontur aufweist, die frei von Kanten Ecken und Vorsprüngen ist.

12. Vorrichtung (1) gemäß einem der vorausgehenden Ansprüche, wobei das Ausleitelement (9) so konfiguriert ist, dass seine Schwenkbewegung um eine reale oder virtuelle Achse (17) erfolgt und der zur Impulsübertragung auf die scheibenförmigen Objekte (2) vorgesehene Oberflächenabschnitt des Ausleitelements (9) in einer parallel zu der Achse (17) verlaufenden Richtung eine Höhe aufweist, die wenigstens der Dicke der zur Sortierung vorgesehenen scheibenförmigen Objekte (2) entspricht, so dass beim Übertrag des mechanischen Impulses von dem Ausleitelement auf das auszuschleusende Objekt (2, 2a) ein Berührungskontakt (18) zwischen dem Ausleitelement (9) und dem Objekt (2, 2a) über dessen gesamte Dicke hinweg besteht.

13. Vorrichtung (1) gemäß einem der vorausgehenden Ansprüche, wobei der zur Impulsübertragung auf die auszuschleusenden Objekte (2, 2a) vorgesehenen Oberflächenabschnitt des Ausleitelements (9) aus einem Material gefertigt ist, dessen Elastizitätsmodul geringer ist als derjenige der zur Sortierung vorgesehenen Objekte (2).

14. Vorrichtung (1) gemäß einem der vorausgehenden Ansprüche, wobei das Ausleitelement (9) so konfiguriert ist, dass dabei sein zur Impulsübertragung auf die Objekte vorgesehener Oberflächenabschnitt schon unmittelbar vor dem Berührungskontakt (18) mit einem auszuschleusenden Objekt (2, 2a) eine entgegen der Förderrichtung (A) gerichtete Bewegungskomponente aufweist.

15. Vorrichtung (1) gemäß einem der vorausgehenden Ansprüche, wobei der bei der Schwenkbewegung des Ausleitelements (9) erreichte maximale Auslenkwinkel des Ausleitelements (9) aus seiner Ausgangsstellung (9a) höchstens 40 Grad, bevorzugt höchstens 30 Grad, besonders bevorzugt höchstens 20 Grad beträgt.

16. Vorrichtung (1) gemäß einem der vorausgehenden Ansprüche, wobei die Vorrichtung (1) eingerichtet ist, 20 oder mehr der Objekte (2), bevorzugt 25 oder mehr der Objekte (2) pro Sekunde zu sortieren.

17. Vorrichtung (1) gemäß einem der vorausgehenden Ansprüche, wobei entlang der Förderstrecke der Ausschleusungseinheit (9) nachfolgend wenigstens eine weitere, Ausschleusungseinheit (5a; 5b) zum selektiven Ausschleusen von einzelnen der entlang der Förderstrecke geförderten Objekten (2) in Abhängigkeit von wenigsten zwei Klassen der für die Objekte (2) jeweils zuvor bestimmten Einordnung in die Klassifizierung vorgesehen ist.

18. Verfahren zum Sortieren von scheibenförmigen Objekten ausgewählt aus der Gruppe bestehend aus Münzen, Wertchips, Token, Jetons und Medaillen, mit den folgenden Schritten:
Fördern (S2) von vereinzelten scheibenförmigen Objekten entlang einer Förderstrecke;
Ausrichten (S2) der zum Ausleitelement (9) hin geförderten Objekte (2) entlang einer entlang der Förderstrecke verlaufenden Ausrichtungslinie; und Selektives Ausschleusen (S7), mittels eines schwenkbaren Ausleitelements (9), von bestimmten der entlang der Förderstrecke geförderten Objekte (2) in Abhängigkeit von einer für die Objekte (2) jeweils zuvor bestimmten Einordnung in eine Klassifizierung, die zwischen Gutteilen und Mangelteilen unterscheidet;
wobei das Ausleitelement (9) zum Ausschleusen eines Objekts (2, 2a) mittels eines Antriebs (7) so in die Förderstrecke eingeschwenkt wird, dass es mittels der Schwenkbewegung einen mechanischen Impuls (P) auf das auszuschleusende Objekt (2) überträgt, dessen Richtung bezüglich der Bewegungsrichtung des Objekts zum Zeitpunkt des Impulsübertrags sowohl eine senkrecht gerichtete Impulskomponente (P_{⊥}) als auch eine anti-parallel gerichtete Impulskomponente (P_{||}) aufweist, die so gewählt sind, dass durch den Impuls (P) die Bewegungsrichtung des Objekts (2, 2a) geändert und dieses dadurch aus der Förderstrecke ausgeschleust wird;
wobei eine Sortierung von Gutteilen und Mangelteilen derart erfolgt, dass nur solche der geförderten Objekte (2, 2a) mittels des Ausleitelements (9) ausgeschleust werden, welche gemäß der Klassifizierung als Gutteile eingeordnet wurden, und
wobei das Ausleitelement (9) bei seiner Schwenkbewegung zunächst eine von Null verschiedene Auslenkung aus seiner Ausgangsstellung ausführen muss, bevor das Ausleitelement (9) mit einem ausgerichteten auszuschleusenden Objekt (2, 2a) zur Übertragung des mechanischen Impulses (P) in Berührungskontakt (18) kommen kann.

19. Verfahren gemäß Anspruch 18, mit den weiteren Schritten:
Sensorisches Inspizieren (S3) der jeweils entlang der Förderstrecke geförderten Objekte (2) ; und
Einordnen (S4) der geförderten Objekte, jeweils in Abhängigkeit vom Ergebnis ihrer Inspektion, in die Klassifizierung; und
Kommunizieren der Einordnungen an eine Ansteuerung des Ausleitelements.

20. Verfahren gemäß Anspruch 18 oder 19 wobei zum Antrieb des Ausleitelements (9) ein Servomotor (7) verwendet wird, der so mittels entsprechender Steuersignale angesteuert wird, dass das Ausleitelement (9) veranlasst wird, in Abhängigkeit von der für die geförderten Objekte (2) jeweils zuvor bestimmten Einordnung in die Klassifizierung selektiv als Gutteile eingeordnete Objekte (2, 2a) mittels der Schwenkbewegung auszuschleusen.

21. Verfahren gemäß Anspruch 20, wobei die Schwenkbewegung des Ausleitelements (9) an den Typ der zu sortierenden Objekte (2) mittels einer Einstellung von zumindest einem der folgenden Parameter der Schwenkbewegung angepasst wird:
- Ein Maß für die Beschleunigung des Ausleitelements (9 bzw. für die diese bewirkende Kraft;
- ein Maß für die nach erfolgter Beschleunigung und vor dem Berührungskontakt des Ausleitelements (9) mit dem auszuschleusenden Objekt (2, 2a) erreichte Endgeschwindigkeit des Ausleitelements (9);
- ein Maß zur Bestimmung des Zeitpunkts für den Start der Schwenkbewegung in Abhängigkeit von einer zuvor erkannten Position des auszuschleusenden Objekts (2, 2a) entlang der Förderstrecke;
- ein Maß für die bei der Schwenkbewegung maximal auftretende Auslenkung aus einer Ausgangsstellung des Ausleitelements (9).

22. Verfahren gemäß einem der Ansprüche 19 bis 21, mit dem weiteren Schritt:
Detektieren (S6) der jeweils entlang der Förderstrecke zur Ausschleusungseinheit (5) hin geförderte Objekte (2);
wobei zum selektiven Ausschleusen eines Objekts (2, 2a) das Ausleitelement (9) in Abhängigkeit von einem das Detektieren des Objekts (2) kennzeichnenden Triggersignal und der Einordnung des Objekts (2) in die Klassifizierung in die Förderstrecke eingeschwenkt wird.

23. Verfahren gemäß einem der Ansprüche 18 bis 22, mit den weiteren Schritten:
Detektieren (S8), ob ein gemäß seiner Einordnung in die Klassifizierung zum Ausschleusen vorgesehenes Objekt nach Erreichen des Ausleitelements (9) gemäß wenigstens einem vorbestimmten Kriterium korrekt aus der Förderstrecke entfernt wurde, und
Ausgeben eines Prüfsignals, das eine korrekte Entfernung und/oder eine nicht korrekt erfolgte Entfernung des Objekts (2, 2a) aus der Förderstrecke kennzeichnet.

24. Verfahren gemäß Anspruch 23, wobei anhand der Prüfsignale eine Auftrittshäufigkeit der Prüfsignale ermittelt und falls die Auftrittshäufigkeit eine vorbestimmte Toleranzschwelle überschreitet ein Störungssignal ausgegeben wird.

25. Verfahren gemäß einem der Ansprüche 18 bis 24, mit den weiteren Schritten (S1):
Detektieren eines Maßes für die Auslenkung des Ausleitelements und Ausgeben eines entsprechenden Lagesignals; und
Zurückführen, auf Basis des Lagesignals, des Ausleitelements (9) in eine Ausgangsstellung, aus der heraus seine jeweiligen Schwenkbewegungen zum selektiven Ausschleusen von Objekten (2) aus der Förderstrecke erfolgen.

26. Verfahren gemäß einem der Ansprüche 18 bis 25, wobei 20 oder mehr, bevorzugt 25 oder mehr der Objekte (2) pro Sekunde mittels der in Abhängigkeit in die Einordnungen der Objekte (2) in die Klassifikation erfolgenden selektiven Ausschleusung sortiert werden.

27. Verfahren gemäß einem der Ansprüche 18 bis 26, wobei dem selektiven Ausschleusen nachfolgend wenigstens ein weiteres selektives Ausschleusen von einzelnen der entlang der Förderstrecke geförderten Objekte in Abhängigkeit von wenigsten zwei Klassen der für die Objekte (2) jeweils zuvor bestimmten Einordnung in die Klassifizierung erfolgt.

## Claims

1. A device (1) for sorting disc-shaped objects (2) selected from the group consisting of coins, chips, tokens, jetons and medals, wherein the device (1) comprises:
a conveying device (3) which is configured to convey individual disc-shaped objects (2) along a conveying path; and
a removal unit (5) with a pivotable diversion element (9) for the selective removal of individual ones of the objects (2) conveyed along the conveying path in dependence upon an assigning, to the objects (2), of a respective previously determined category within a classification which distinguishes between good parts and defective parts;
wherein the diversion element (9) is arranged to be pivoted into the conveying path by means of a drive (7) in such a way that, for the removal of an object (2, 2a), it transfers a mechanical momentum (P) to the object to be removed by means of the pivoting movement, which mechanical momentum has, with respect to the direction of movement of the object at the time of the momentum transfer, both a momentum component (P_{⊥}) which is directed perpendicular thereto, as well as a momentum component (P_{||}) which is directed anti-parallel thereto, which momentum components are chosen in such a way that the direction of movement of the object (2, 2a) is changed by the momentum (P) and the object is thereby removed from the conveying path;
wherein the removal unit (5) is configured to effect a sorting of good parts and defective parts in such a way that only those of the conveyed objects (2, 2a) are removed by means of the diversion element which have been classified as good parts according to the classification; and
wherein the conveying device (3) has an alignment device (15) for aligning the objects (2) which have been conveyed to the diversion element (9) along an alignment line extending along the conveying path, and the diversion element (9) is arranged offset with respect to this alignment line in such a way that, during its pivoting movement, a deflection from its initial position which is different from zero must first take place before the diversion element (9) can come into contact (18) with an object (2, 2a) which is to be removed and which is aligned in this way in order to transfer the mechanical momentum (P).

2. The device (1) in accordance with claim 1, further comprising:
an inspection unit (4) which is arranged along the conveying path upstream of the diversion element (9) and which is arranged to inspect, in a sensor-based manner, each of the objects (2) conveyed along the conveying path and, depending on the result of the inspection, to assign, to the conveyed objects (2), a category within the classification and to communicate these assigned categories to the removal unit (5).

3. The device (1) in accordance with any one of the preceding claims, wherein an electric motor (7) is provided to drive the diversion element (9), with the driven shaft (8) of which the diversion element (9) is coupled.

4. The device (1) in accordance with claim 3, wherein the electric motor (7) is a servo motor and the removal unit (5) further comprises a control unit (6) which is arranged to control the servo motor (7) by means of corresponding control signals in order to cause the diversion element (9) driven by the servo motor (7) to remove objects by means of the pivoting movement, which objects have been selectively classified as good parts, depending on the assigning of a category previously determined for the conveyed objects (2) within the classification.

5. The device (1) in accordance with claim 4, wherein the control unit (6), in order to adapt the pivoting movement of the diversion element (9) to the type of the objects (2) to be sorted, can be configured in such a way that at least one of the following parameters of the pivoting movement can be adjusted:
- a measure of the acceleration of the diversion element (9), or of the force which causes this;
- a measure of the final velocity of the diversion element (9) which has been reached after acceleration has taken place and before the diversion element (9) has made contact (17) with the object (2, 2a) to be removed;
- a measure for determining the point in time for the start of the pivoting movement as a function of a previously detected position, along the conveying path, of the object (2, 2a) to be removed;
- a measure of the maximum deflection occurring during the pivoting movement from an initial position of the diversion element (9).

6. The device (1) in accordance with any one of the preceding claims, further comprising a trigger sensor (12) that is configured to detect objects (2) which are being conveyed along the conveying path to the removal unit (5) and, if an object (2) is detected, to output a trigger signal to the removal unit (5) that indicates the detection;
wherein the removal unit (5) is configured, to pivot the diversion element into the conveying path in dependence upon the trigger signal and the assigning of a category within the classification to an object (2, 2a) in order to selectively remove the object (2, 2a).

7. The device (1) in accordance with any one of the preceding claims, further comprising a test sensor (13) which is configured to detect whether an object (2, 2a) which is intended to be removed in accordance with it having been assigned a category within the classification has, after reaching the diversion element (9), been correctly removed from the conveying path in accordance with at least one predetermined criterion and to output a test signal which indicates a correct removal and / or that a removal of the object (2, 2a) from the conveying path has not taken place correctly.

8. The device (1) in accordance with claim 7, further comprising an evaluation unit (6) which is arranged to determine a frequency of occurrence of the test signals on the basis of the test signals output by the test sensor (13), and to output a fault signal if the frequency of occurrence exceeds a predetermined tolerance threshold.

9. The device (1) in accordance with any one of the preceding claims, further comprising a position sensor (14) which is configured to detect a measure of the deflection of the diversion element (9) and to output a corresponding position signal,
wherein the device (1) is configured to return the diversion element (9) to a predefined initial position (9a) on the basis of the position signal, from which predefined initial position its respective pivoting movements for the selective removal of objects (2) from the conveying path take place.

10. The device (1) in accordance with any one of the preceding claims, wherein the diversion element (9) has the shape of a cam.

11. The device (1) in accordance with any one of the preceding claims, wherein, at least on its surface portion intended for the transfer of momentum to the objects, the diversion element (9) has a contour that is free of edges, corners and projections.

12. The device (1) in accordance with any one of the preceding claims, wherein the diversion element (9) is configured in such a way that its pivoting movement takes place about a real or virtual axis (17) and that the surface portion of the diversion element (9) which is intended for the transfer of momentum to the disc-shaped objects (2) has, in a direction parallel to the axis (17), a height which is at least equal to the thickness of the disc-shaped objects (2) which are intended for sorting so that, during the transfer of the mechanical momentum from the diversion element to the object (2, 2a) that is to be removed, there is contact (18) between the diversion element (9) and the object (2, 2a) over the entire thickness of the latter.

13. The device (1) in accordance with any one of the preceding claims, wherein the surface portion of the diversion element (9) which is intended for the transfer of momentum to the objects (2, 2a) to be removed is made of a material whose modulus of elasticity is lower than that of the objects (2) intended for sorting.

14. The device (1) in accordance with any one of the preceding claims, wherein the diversion element (9) is configured in such a way that its surface portion which is intended for the transfer of momentum to the objects already has a movement component directed against the conveying direction (A) immediately before the contact (18) with an object (2, 2a) which is to be removed.

15. The device (1) in accordance with any one of the preceding claims, wherein the maximum deflection angle of the diversion element (9) from its initial position (9a) achieved during the pivoting movement of the diversion element (9) is at most 40 degrees, preferably at most 30 degrees, particularly preferably at most 20 degrees.

16. The device (1) in accordance with any one of the preceding claims, wherein the device (1) is arranged to sort 20 or more of the objects (2), preferably 25 or more of the objects (2), per second.

17. The device (1) in accordance with any one of the preceding claims, wherein at least one further removal unit (5a; 5b) is provided along the conveying path downstream of the removal unit (9) for the selective removal of individual ones of the objects (2) conveyed along the conveying path, in dependence upon at least two classes of the assigning of categories of the classification previously determined for the respective objects (2).

18. A method of sorting disc-shaped objects selected from the group consisting of coins, chips, tokens, jetons and medals, wherein the method comprises the following steps:
conveying (S2) individual disc-shaped objects along a conveying path;
aligning (S2) the objects (2) conveyed towards the diversion element (9) along an alignment line extending along the conveying path; and
selectively removing (S7), by means of a pivotable diversion element (9), certain ones of the objects (2) conveyed along the conveying path, in dependence upon a prior assigning, to the objects (2), of a category within a classification, which distinguishes between good parts and defective parts;
wherein, for the removal of an object (2, 2a), the diversion element (9) is pivoted into the conveying path by means of a drive (7) in such a way that it transfers a mechanical momentum (P) to the object (2) to be removed by means of the pivoting movement, whose direction with respect to the direction of movement of the object at the time of the transfer of momentum has both a momentum component (P_{⊥}) which is directed perpendicular as well as a momentum component (P_{||}) which is directed anti-parallel with respect to the direction of movement of the object, which momentum components are chosen in such a way that the direction of movement of the object (2, 2a) is changed by the momentum (P) and that this is thereby removed from the conveying path;
wherein a sorting of good parts and defective parts is carried out in such a way that only those of the conveyed objects (2, 2a) are removed by means of the diversion element (9) which have been classified as good parts in accordance with the classification, and
wherein, during its pivoting movement, the diversion element (9) must first carry out a deflection from its initial position which is different from zero, before the diversion element (9) can come into contact (18) with an object (2, 2a) which is aligned and which is to be removed, in order to transfer the mechanical momentum (P).

19. The method in accordance with claim 18, comprising the further steps of:
a sensor-based inspection (S3) of the respective objects (2) conveyed along the conveying path; and
an assigning (S4) of a category to the conveyed objects, depending on the respective result of their inspection, in the classification; and
a communication of the classification category to a controller of the diversion element.

20. The method in accordance with claim 18 or 19, wherein a servo motor (7) is used to drive the diversion element (9), which servo motor is controlled by means of appropriate control signals in such a way that the diversion element (9) is caused to selectively remove, by means of the pivoting movement, objects (2, 2a) which have been classified as good parts in dependence upon the respective previously determined category within the classification for the conveyed objects (2).

21. The method in accordance with claim 20, wherein the pivoting movement of the diversion element (9) is adapted to the type of objects (2) to be sorted by means of an adjustment of at least one of the following parameters of the pivoting movement:
- a measure of the acceleration of the diversion element (9) or of the force causing this;
- a measure of the final velocity of the diversion element (9) which is reached after acceleration has taken place and before the diversion element (9) makes contact with the object (2, 2a) which is to be removed;
- a measure for determining the time for the start of the pivoting movement as a function of a previously detected position, along the conveying path, of the object (2, 2a) which is to be removed;
- a measure of the maximum deflection which occurs during the pivoting movement from an initial position of the diversion element (9).

22. The method in accordance with any one of the claims 19 to 21, comprising the further step of:
detecting (S6) the objects (2) conveyed along the conveying path to the removal unit (5);
wherein, for the selective removal of an object (2, 2a), the diversion element (9) is pivoted into the conveying path as a function of a trigger signal characterizing the detection of the object (2) and as a function of the assigning of a category to the object (2) within the classification.

23. The method in accordance with any one of the claims 18 to 22, comprising the further steps of:
detecting (S8) whether an object which is intended to be removed in accordance with it having been assigned a category within the classification has, after reaching the diversion element (9), been correctly removed from the conveying path in accordance with at least one predetermined criterion, and
outputting a test signal which indicates a correct removal and / or that a removal of the object (2, 2a) from the conveying path has not taken place correctly.

24. The method in accordance with claim 23, wherein a frequency of occurrence of the test signals is determined on the basis of the test signals, and if the frequency of occurrence exceeds a predetermined tolerance threshold, an error signal is output.

25. The method in accordance with any one of the claims 18 to 24, comprising the further steps (S1) of:
detecting a measure of the deflection of the diversion element and outputting a corresponding position signal; and
returning, on the basis of the position signal, the diversion element (9) to an initial position from which its respective pivoting movements for selectively removing objects (2) from the conveying path take place.

26. The method in accordance with any one of the claims 18 to 25, wherein 20 or more, preferably 25 or more, of the objects (2) are sorted per second by means of the selective removal taking place in dependence on the assigning, to the objects (2), of a category within the classification.

27. The method in accordance with any one of the claims 18 to 26, wherein the selective removal is followed by at least one further selective removal of individual objects conveyed along the conveying path, in dependence upon at least two classes of the assigning of categories of the classification previously determined for the respective objects (2).

## Revendications

1. Dispositif (1) de tri d'objets (2) en forme de disque choisis dans le groupe composé de pièces de monnaie, jetons de valeur, tokens, jetons et médailles, présentant :
un dispositif de convoyage (3), qui est configuré pour convoyer des objets (2) en forme de disque individualisés le long d'un chemin de convoyage ; et
une unité d'éclusage (5) avec un élément d'évacuation (9) pivotant pour l'éclusage sélectif d'objets (2) individuels convoyés le long du chemin de convoyage en fonction d'un classement déterminé respectivement auparavant pour les objets (2) dans une classification, qui distingue les bonnes pièces et les pièces défectueuses ;
dans lequel l'élément d'évacuation (9) est aménagé pour être pivoté dans le chemin de convoyage pour l'éclusage d'un objet (2, 2a) au moyen d'un entraînement (7) de sorte qu'il transmet une impulsion mécanique (P) à l'objet à écluser au moyen du mouvement de pivotement, qui présente par rapport à la direction de déplacement de l'objet au moment de la transmission d'impulsion aussi bien une composante d'impulsion dirigée perpendiculairement (P⊥) qu'une composante d'impulsion dirigée antiparallèlement (P_{||}), qui sont choisies de sorte que la direction de déplacement de l'objet (2, 2a) est modifiée par l'impulsion (P) et celui-ci est ainsi éclusé hors du chemin de convoyage ;
dans lequel l'unité d'éclusage (5) est configurée pour provoquer un tri des bonnes pièces et des pièces défectueuses de sorte que seuls sont éclusés au moyen de l'élément d'évacuation les objets (2, 2a) convoyés, qui ont été classés comme bonnes pièces selon la classification ; et
dans lequel le dispositif de convoyage (3) présente un dispositif d'orientation (15) pour l'orientation des objets (2) convoyés vers l'élément d'évacuation (9) le long d'une ligne d'orientation s'étendant le long du chemin de convoyage, et l'élément d'évacuation (9) est agencé de manière décalée par rapport à cette ligne d'orientation de sorte que lors de son mouvement de pivotement il doit d'abord y avoir une excursion différente de zéro de sa position initiale avant que l'élément d'évacuation (9) puisse entrer en contact (18) avec un objet (2, 2a) à écluser orienté de telle manière pour la transmission de l'impulsion mécanique (P).

2. Dispositif (1) selon la revendication 1, présentant en outre :
une unité d'inspection (4), qui est agencée le long du chemin de convoyage en amont de l'élément d'évacuation (9) et aménagée pour inspecter respectivement de manière sensorielle les objets (2) convoyés le long du chemin de convoyage et classer en fonction du résultat de l'inspection les objets (2) convoyés respectivement dans la classification et communiquer ces classements à l'unité d'éclusage (5).

3. Dispositif (1) selon l'une quelconque des revendications précédentes, dans lequel pour l'entraînement de l'élément d'évacuation (9, un moteur électrique (7) est prévu, avec lequel arbre entraîné (8) l'élément d'évacuation (9) est couplé.

4. Dispositif (1) selon la revendication 3, dans lequel le moteur électrique (7) est un servomoteur et l'unité d'éclusage (5) présente en outre une unité de commande (6), qui est aménagée pour commander le servomoteur (7) au moyen de signaux de commande correspondants afin d'amener l'élément d'évacuation (9) entraîné par le servomoteur (7) à écluser de manière sélective en fonction du classement déterminé respectivement auparavant pour les objets (2) convoyés dans la classification des objets classés comme bonnes pièces au moyen du mouvement de pivotement.

5. Dispositif (1) selon la revendication 4, dans lequel l'unité de commande (6) peut être configurée pour l'adaptation du mouvement de pivotement de l'élément d'évacuation (9) au type des objets (2) à trier de sorte qu'au moins un des paramètres suivants du mouvement de pivotement est réglable :
- une mesure pour l'accélération de l'élément d'évacuation (9) ou pour la force provoquant celle-ci ;
- une mesure pour la vitesse finale de l'élément d'évacuation (9) atteinte après que l'accélération a eu lieu et avant le contact (17) de l'élément d'évacuation (9) avec l'objet (2, 2a) à écluser ;
- une mesure pour la détermination du moment pour le démarrage du mouvement de pivotement en fonction d'une position détectée auparavant de l'objet (2, 2a) à écluser le long du chemin de convoyage ;
- une mesure pour l'excursion maximum survenant lors du mouvement de pivotement d'une position initiale de l'élément d'évacuation (9).

6. Dispositif (1) selon l'une quelconque des revendications précédentes, présentant en outre un capteur de déclencheur (12), qui est configuré pour détecter respectivement des objets (2) convoyés le long du chemin de convoyage vers l'unité d'éclusage (5) et lorsqu'un objet (2) est détecté, émettre un signal de déclencheur caractérisant la détection à l'unité d'éclusage (5) ;
dans lequel l'unité d'éclusage (5) est configurée pour faire pivoter pour l'éclusage sélectif d'un objet (2, 2a), l'élément d'évacuation en fonction du signal de déclencheur et du classement de l'objet (2, 2a) dans la classification dans le chemin de convoyage.

7. Dispositif (1) selon l'une quelconque des revendications précédentes, présentant en outre un capteur de contrôle (13), qui est configuré pour détecter si un objet (2, 2a) prévu pour l'éclusage selon son classement dans la classification a été retiré correctement du chemin de convoyage selon au moins un critère prédéterminé après avoir atteint l'élément d'évacuation (9) et émettre un signal de contrôle, qui caractérise un retrait correct et/ou un retrait non correct de l'objet (2, 2a) du chemin de convoyage.

8. Dispositif (1) selon la revendication 7, présentant en outre une unité d'évaluation (6), qui est aménagée pour déterminer à l'aide des signaux de contrôle émis par le capteur de contrôle (13) une fréquence d'occurrence des signaux de contrôle et si la fréquence d'occurrence dépasse un seuil de tolérance prédéterminé, émettre un signal d'incident.

9. Dispositif (1) selon l'une quelconque des revendications précédentes, présentant en outre un capteur de position (14), qui est configuré pour détecter une mesure pour l'excursion de l'élément d'évacuation (9) et émettre un signal de position correspondant,
dans lequel le dispositif (1) est configuré pour ramener sur la base du signal de position l'élément d'évacuation (9) dans une position initiale prédéfinie (9a), à partir de laquelle ses mouvements de pivotement respectifs ont lieu pour l'éclusage sélectif d'objets (2) hors du chemin de convoyage.

10. Dispositif (1) selon l'une quelconque des revendications précédentes, dans lequel l'élément d'évacuation (9) présente la forme d'une came.

11. Dispositif (1) selon l'une quelconque des revendications précédentes, dans lequel l'élément d'évacuation (9) présente au moins sur sa section de surface prévue pour la transmission d'impulsion aux objets, un contour, qui est dépourvu d'arêtes, de coins et de saillies.

12. Dispositif (1) selon l'une quelconque des revendications précédentes, dans lequel l'élément d'évacuation (9) est configuré de sorte que son mouvement de pivotement a lieu autour d'un axe réel ou virtuel (17) et la section de surface prévue pour la transmission d'impulsion aux objets (2) en forme de disque de l'élément d'évacuation (9) présente dans une direction s'étendant parallèlement à l'axe (17) une hauteur, qui correspond au moins à l'épaisseur des objets (2) en forme de disque prévus pour le tri, de sorte que lors de la transmission de l'impulsion mécanique de l'élément d'évacuation à l'objet (2, 2a) à écluser, il y a un contact (18) entre l'élément d'évacuation (9) et l'objet (2, 2a) sur toute son épaisseur.

13. Dispositif (1) selon l'une quelconque des revendications précédentes, dans lequel la section de surface prévue pour la transmission d'impulsion aux objets (2, 2a) à écluser de l'élément d'évacuation (9) est fabriquée en un matériau dont le module d'élasticité est inférieur à celui des objets (2) prévus pour le tri.

14. Dispositif (1) selon l'une quelconque des revendications précédentes, dans lequel l'élément d'évacuation (9) est configuré de sorte que ce faisant sa section de surface prévue pour la transmission d'impulsion aux objets présente déjà immédiatement avant le contact (18) avec un objet (2, 2a) à écluser une composante de déplacement dirigée à l'opposé de la direction de convoyage (A).

15. Dispositif (1) selon l'une quelconque des revendications précédentes, dans lequel l'angle d'excursion maximum de l'élément d'évacuation (9) atteint lors du mouvement de pivotement de l'élément d'évacuation (9) hors de sa position initiale (9a) est au maximum de 40 degrés, de préférence au maximum de 30 degrés, de manière particulièrement préférée au maximum de 20 degrés.

16. Dispositif (1) selon l'une quelconque des revendications précédentes, dans lequel le dispositif (1) est aménagé pour trier 20 ou plus des objets (2), de préférence 25 ou plus des objets (2) par seconde.

17. Dispositif (1) selon l'une quelconque des revendications précédentes, dans lequel le long du chemin de convoyage après l'unité d'éclusage (9), au moins une autre unité d'éclusage (5a ; 5b) est prévue pour l'éclusage sélectif d'objets (2) individuels convoyés le long du chemin de convoyage en fonction d'au moins deux classes du classement déterminé respectivement auparavant pour les objets (2) dans la classification.

18. Procédé de tri d'objets en forme de disque choisis dans le groupe composé de pièces de monnaie, jetons de valeur, tokens, jetons et médailles, avec les étapes suivantes :
convoyage (S2) d'objets en forme de disque individualisés le long d'un chemin de convoyage;
orientation (S2) des objets (2) convoyés vers l'élément d'évacuation (9) le long d'une ligne d'orientation s'étendant le long du chemin de convoyage ; et
éclusage sélectif (S7), au moyen d'un élément d'évacuation (9) pivotant, d'objets (2) déterminés convoyés le long du chemin de convoyage en fonction d'un classement déterminé respectivement auparavant pour les objets (2) dans une classification, qui distingue les bonnes pièces et les pièces défectueuses ;
dans lequel l'élément d'évacuation (9) est pivoté dans le chemin de convoyage pour l'éclusage d'un objet (2, 2a) au moyen d'un entraînement (7) de sorte qu'il transmet une impulsion mécanique (P) à l'objet (2) à écluser au moyen du mouvement de pivotement, dont la direction présente par rapport à la direction de déplacement de l'objet au moment de la transmission d'impulsion aussi bien une composante d'impulsion dirigée perpendiculairement (P⊥) qu'une composante d'impulsion dirigée antiparallèlement (P_{||}), qui sont choisies de sorte que la direction de déplacement de l'objet (2, 2a) est modifiée par l'impulsion (P) et celui-ci est ainsi éclusé hors du chemin de convoyage ;
dans lequel un tri des bonnes pièces et des pièces défectueuses a lieu de sorte que seuls sont éclusés au moyen de l'élément d'évacuation (9) les objets (2, 2a) convoyés, qui ont été classés comme bonnes pièces selon la classification ; et
dans lequel l'élément d'évacuation (9) doit réaliser lors de son mouvement de pivotement d'abord une excursion différente de zéro de sa position initiale, avant que l'élément d'évacuation (9) puisse entrer en contact (18) avec un objet (2, 2a) à écluser orienté pour la transmission de l'impulsion mécanique (P).

19. Procédé selon la revendication 18, avec les autres étapes :
inspection sensorielle (S3) des objets (2) convoyés respectivement le long du chemin de convoyage ; et
classement (S4) des objets convoyés, respectivement en fonction du résultat de leur inspection, dans la classification ; et
communication des classements à une commande de l'élément d'évacuation.

20. Procédé selon la revendication 18 ou 19, dans lequel pour l'entraînement de l'élément d'évacuation (9), un servomoteur (7) est utilisé, qui est commandé au moyen de signaux de commande correspondants de sorte que l'élément d'évacuation (9) est amené à écluser de manière sélective en fonction du classement déterminé respectivement auparavant pour les objets (2) convoyés dans la classification des objets (2, 2a) classés comme bonnes pièces au moyen du mouvement de pivotement.

21. Procédé selon la revendication 20, dans lequel le mouvement de pivotement de l'élément d'évacuation (9) est adapté au type des objets (2) à trier au moyen d'un réglage d'au moins un des paramètres suivants du mouvement de pivotement :
- une mesure pour l'accélération de l'élément d'évacuation (9 ou pour la force provoquant celle-ci ;
- une mesure pour la vitesse finale de l'élément d'évacuation (9) atteinte après que l'accélération a eu lieu et avant le contact de l'élément d'évacuation (9) avec l'objet (2, 2a) à écluser ;
- une mesure pour la détermination du moment pour le démarrage du mouvement de pivotement en fonction d'une position détectée auparavant de l'objet (2, 2a) à écluser le long du chemin de convoyage ;
- une mesure pour l'excursion maximum survenant lors du mouvement de pivotement d'une position initiale de l'élément d'évacuation (9).

22. Procédé selon l'une quelconque des revendications 19 à 21, avec l'autre étape :
détection (S6) des objets (2) convoyés respectivement le long du chemin de convoyage vers l'unité d'éclusage (5) ;
dans lequel pour l'éclusage sélectif d'un objet (2, 2a), l'élément d'évacuation (9) est pivoté en fonction d'un signal de déclencheur caractérisant la détection de l'objet (2) et du classement de l'objet (2) dans la classification dans le chemin de convoyage.

23. Procédé selon l'une quelconque des revendications 18 à 22, avec les autres étapes :
détection (S8) du fait si un objet prévu pour l'éclusage selon son classement dans la classification a été retiré correctement du chemin de convoyage selon au moins un critère prédéterminé après avoir atteint l'élément d'évacuation (9), et
émission d'un signal de contrôle, qui caractérise un retrait correct et/ou un retrait non correct de l'objet (2, 2a) du chemin de convoyage.

24. Procédé selon la revendication 23, dans lequel une fréquence d'occurrence des signaux de contrôle est déterminée à l'aide des signaux de contrôle et si la fréquence d'occurrence dépasse un seuil de tolérance prédéterminé, un signal d'incident est émis.

25. Procédé selon l'une quelconque des revendications 18 à 24, avec les autres étapes (S1) :
détection d'une mesure pour l'excursion de l'élément d'évacuation et émission d'un signal de position correspondant ; et
retour, sur la base du signal de position, de l'élément d'évacuation (9) dans une position initiale, à partir de laquelle ses mouvements de pivotement respectifs ont lieu pour l'éclusage sélectif d'objets (2) hors du chemin de convoyage.

26. Procédé selon l'une quelconque des revendications 18 à 25, dans lequel 20 ou plus, de préférence 25 ou plus des objets (2) par seconde sont triés au moyen de l'éclusage sélectif ayant lieu en fonction des classements des objets (2) dans la classification.

27. Procédé selon l'une quelconque des revendications 18 à 26, dans lequel après l'éclusage sélectif, au moins un autre éclusage sélectif d'objets individuels convoyés le long du chemin de convoyage a lieu en fonction d'au moins deux classes du classement déterminé respectivement auparavant pour les objets (2) dans la classification.
